(19)

**Europäisches Patentamt**
**European Patent Office**
**Office européen des brevets**

(11) **EP 1 612 672 B1**

(12) **EUROPEAN PATENT SPECIFICATION**

(45) Date of publication and mention
of the grant of the patent:
**13.02.2008 Bulletin 2008/07**

(51) Int Cl.:
**G06F 9/50** $^{(2006.01)}$

(21) Application number: **04015514.5**

(22) Date of filing: **01.07.2004**

(54) **A data processing system for assigning objects to processing units**

Datenverarbeitungssystem zur Zuweisung von Objekten an Verarbeitungseinheiten

Système de traitement de données pour assigner des objets à des unités de traitement

(84) Designated Contracting States:
**DE GB**

(43) Date of publication of application:
**04.01.2006 Bulletin 2006/01**

(73) Proprietor: **SAP AG**
**69190 Walldorf (DE)**

(72) Inventor: **Sauermann, Volker**
**69120 Heidelberg (DE)**

(74) Representative: **Richardt, Markus Albert et al**
**Leergasse 11**
**65343 Eltville am Rhein (DE)**

(56) References cited:
• **FIAT A ET AL: "Online Algorithms: the State of the Art passage" LECTURE NOTES IN COMPUTER SCIENCE, SPRINGER VERLAG, NEW YORK, NY, US, vol. 1442, 1998, pages 147-195, XP002294222 ISSN: 0302-9743**
• **AGGARWAL G ET AL: "The load rebalancing problem" SPAA 2003. 15TH. ANNUAL ACM SYMPOSIUM ON PARALLEL ALGORITHMS AND ARCHITECTURES. SAN DIEGO, CA, JUNE 7 - 9, 2003, ANNUAL ACM SYMPOSIUM ON PARALLEL ALGORITHMS AND ARCHITECTURES, NEW YORK, NY : ACM, US, 7 June 2003 (2003-06-07), pages 258-265, XP002285345 ISBN: 1-58113-661-7**
• **LEINBERGER W ET AL: "Multi-Capacity Bin Packing Algorithms wit Applications to Job Scheduling under Multiple Constraints (TR 99-024)" UNIVERSITY OF MINNESOTA - COMPUTER SCIENCE AND ENGINEERING - TECHNICAL REPORT ABSTRACT, XX, XX, no. 99-24, 27 May 1999 (1999-05-27), XP002285342**
• **COFFMAN E G ET AL: "APPROXIMATION ALGORITHMS FOR BIN PACKINGA SURVEY" APPROXIMATION ALGORITHMS FOR NP-HARD PROBLEMS, XX, XX, 1996, pages 1-53, XP002285343**

**Description**

**Field of the invention.**

The present invention relates to the field of data processing, and more particularly without limitation, to balancing the assignment of objects to processing units in a multi-computing environment.

**Background and prior art**

Various multi-computing architectures are known from the prior art where a plurality of processing units is coupled to form a cluster. Such architectures are used in parallel processing and also in the emerging field of blade computing.

Blade computing relies on blade servers, which are modular, single-board computers. An overview of blade computing is given in "Architectures and Infrastructure for Blade Computing", September 2002, Sun microsystems and "THE NEXT WAVE: BLADE SERVER COMPUTING", Sun Microsystems (www.sun.com/servers/entry/blade).

A content load balancing blade is commercially available from Sun microsystems ("Sun Fire TM B10n). This blade provides traffic and content management functionalities. Content load balancing is achieved based on URLs, CGI scripts and cookies; server load balancing is achieved based on server loads, response times, and weighted round-robin algorithms. Blade servers are commercially available e.g. from Intel (http://www.intel.com/design/servers/blades/).

US patent application no. 20030105903 shows a web edge server, which comprises a number of blade servers. A switch and an information distribution module are provided for the purpose of balancing. The information distribution module receives an information message, performs processing on the message to determine a destination, and forwards a message toward the determined destination via an internal communications network.

Aggarwal, G.; Motwani, R.; Zhu, A.: "The load rebalancing problem" deals with the problem of rebalancing processor load. Given a possibly sub-optimal assignment of jobs to processors the purpose of load rebalancing is to reassign jobs to different processors so as to minimize the makespan, by moving as few jobs as possible.

Fiat A, Woeginger G J 'Online algorithms: the state of the art' (1998) disclose various standard algorithms for higher dimensional packing problems.

Leinberger W et al. "Multi-capacity bin packaging algorithms with applications to job scheduling under multiple constraints" shows various algorithms for job scheduling.

Kit-Sang T. et al.: "Optimal File Placement in VOD System Using Genetic Algorithm (2001 - 10), IEEE Transactions on Industrial Electronics, shows a method of assigning multimedia files to disk locations using a modified pin-packing algorithm".

**Summary of the invention**

The invention provides for a data processing system, a method and a computer program product as claimed. The present invention provides a data processing system for assigning a set of objects to processing units of a cluster of processing units. Each processing unit of the cluster has a capacity for accommodating objects. The data processing system has means for selection of a first or a second mode of operation and means for determining a distribution of the set of objects over a set of the processing units. Further, the data processing system has means for determining a minimum number of the processing units that have a sufficient capacity for accommodating the set of the objects. In a first mode of operation the set of processing units to which the set of objects are to be assigned contains all the processing units of the cluster. In a second mode of operation the set of processing units contains the minimum number of the processing units.

The present invention is particularly advantageous as it provides the option to either optimise a distribution of objects over processing units using all the processing units of the cluster or only the minimum number of required processing units. Typically the first mode of operation is selected when largely sufficient hardware capacity is available. In this instance the main purpose of the re-distribution of objects to the processing unit is to establish a smooth distribution in order to evenly utilise the available hardware resources and in order to prevent swapping operations that would reduce the performance of the multi processor system and extend response times.

If hardware resources are scarce, or if some of the processing units need to be freed for special computing tasks, the second mode of operation is selected in order to densely pack the objects onto a minimum number of processing units that can handle the objects.

In accordance with a preferred embodiment of the invention first and second distribution modes can be selected in order to determine an initial distribution of the objects to the processing units or to determine a re-distribution for optimisation of the current distribution. In the first distribution mode only a single property of the objects is used in order to perform the distribution or re-distribution. For this purpose a one-dimensional distribution procedure is utilised. In the second distribution mode at least first and second properties of the objects are used for determining the distribution or re-distribution. For this purpose a distribution procedure that takes into account at least two dimensions is utilised.

In accordance with a further preferred embodiment of the invention, the single property of the objects that is used in the first distribution mode is the size or the load of the objects. For example, the size-property is the storage space that a given object requires on a processing unit. The load-property can be defined as the mean number of access operations to the object per time unit, or as another suitable statistical measure that expresses the processing load of the processing unit to which the object is assigned. For example, the property or properties that is/are selected for the first or second distribution mode are stored in the user settings.

In accordance with a further preferred embodiment of the invention both the size and load properties of the objects are used in the second distribution mode in order to determine a distribution or re-distribution of the objects over the processing units. This is in contrast to the first distribution mode where only a single property is used. The aim of the first distribution mode is to smoothen the distribution with respect to the single property that is considered. However, this can result in a rough distribution as regards another property. For example, performing a distribution using the size properties will result in a relatively smooth size distribution but the loads can be distributed quite unevenly. Using more than one property of the objects as a basis for the distribution or re-distribution procedure will optimize the distribution regarding all of the considered properties. For example, using size and load for performing the distribution will typically result in a rougher distribution of the aggregated sizes over the processing units compared to the one-dimensional distribution mode that uses the size criterion alone, but in a smoother distribution of the loads.

In accordance with a further preferred embodiment of the invention the minimum number of processing units is determined using the same object property or properties as for the distribution or re-distribution, if the second mode of operation has been selected.

A one-dimensional procedure is used for determining the minimum number of the processing units if the first distribution mode and the second mode of operation have been selected whereas at least a two-dimensional procedure for determining the minimum number of the processing unit is employed then the second distribution mode and the second mode of operation have been selected.

In accordance with a further preferred embodiment of the invention a re-distribution of the objects over the processing units is initiated automatically. For example, a user can set a timer that automatically initiates the re-distribution at predefined times, such as periodically, e.g. once each day. The setting of the timer is conveniently done via the user interface. Alternatively the distribution or re-distribution is started manually upon a user's corresponding input operation.

In accordance with a further preferred embodiment of the invention the current distribution and a re-distribution that has been determined for optimisation of the current distribution is visualised for a user's review. When the user approves the suggested redistribution he or she can enter a corresponding acceptance. In response to the user's entry of his or her acceptance the re-distribution procedure is initiated.

In accordance with a further preferred embodiment of the invention the data processing system is one of the processing units to which the objects are assigned. This means that in a blade computing environment one of the blade servers takes the role of a management unit in order to perform the management task of assigning the objects to the processing units. Perferably the management unit is implemented as the management process of a search engine. Alternatively the management unit is a separate control unit that is not used as a blade server.

The present invention is particularly advantageous for search engines such as internet search engines, that require a large distributed search index. Another preferred application is the reduction of the response time of a relational database, such as an online transaction processing system. The database tables stored in the relational database system that are required for certain time-critical applications are replicated in the blade computing system of the invention in order to decrease response times for those time critical tasks.

**Brief description of the drawings**

In the following preferred embodiments of the invention are explained in greater detail by way of example only, making reference to the drawings in which:

Figure 1            Is a block diagram of a preferred embodiment of the blade computing system of the invention,

Figure 2            Schematically shows a window for entering of the settings into the blade computing system of figure 1,

Figure 3            Illustrates a window for manually initiating the re-distribution,

Figure 4            Illustrates a preferred embodiment of a method of the invention,

Figure 5          Is a flow diagram for assigning of objects to blades and for determining the minimum number of blades,

Figure 6          Is an example for tables that need to be assigned to blades,

Figure 7          Shows the result of a sorting operation,

Figure 8          Shows a first step of assigning a table to a first one of the blades,

Figure 9          Shows a second step for assigning a table to the first blade,

Figure 10         Shows a first assignment of a blade to a second blade,

Figure 11         Shows a second assignment of a table to the second blade,

Figure 13         Shows an assignment of three further tables to the second blade,

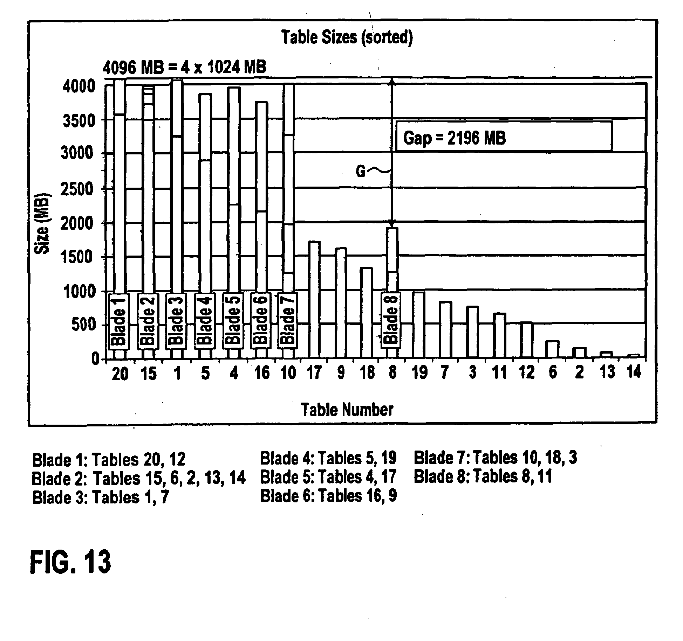

Figure 13         Shows the resulting assignment of tables to blades as a result of the assignment procedure,

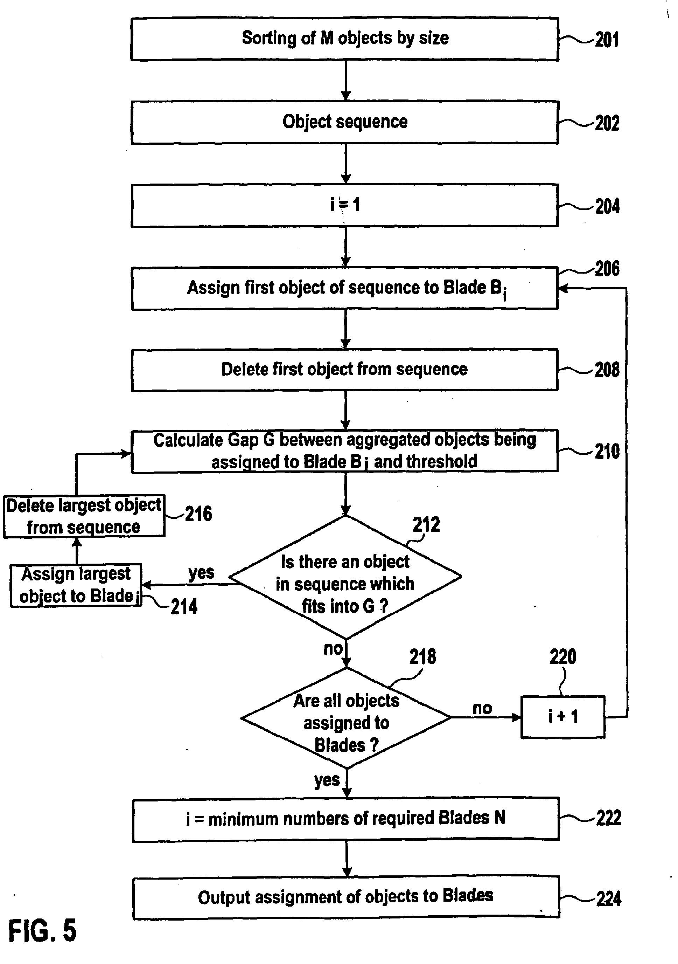

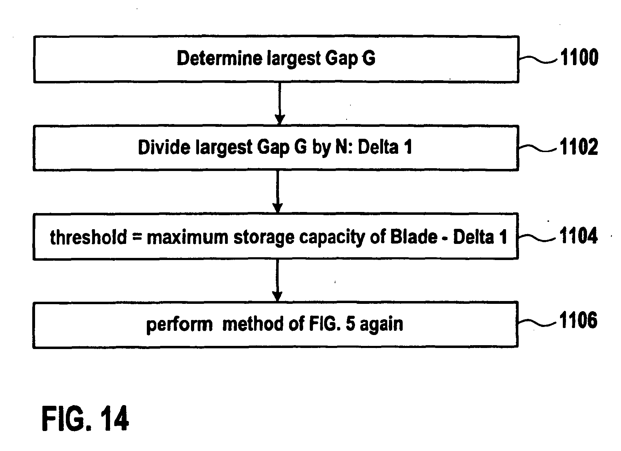

Figure 14         Is illustrative of a one-dimensional procedure for refinement of the result obtained by performing the method of figure 5, where the procedure of figure 5 is performed again with a lower threshold,

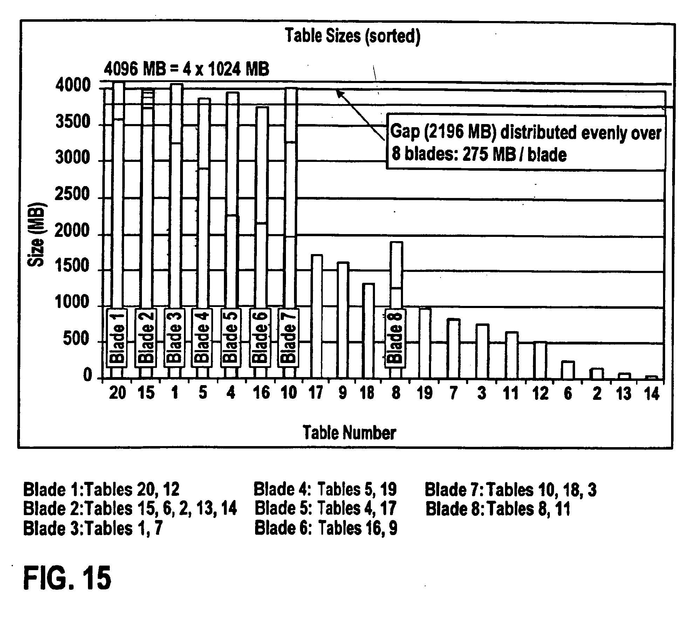

Figure 15         Is illustrative of the lower threshold,

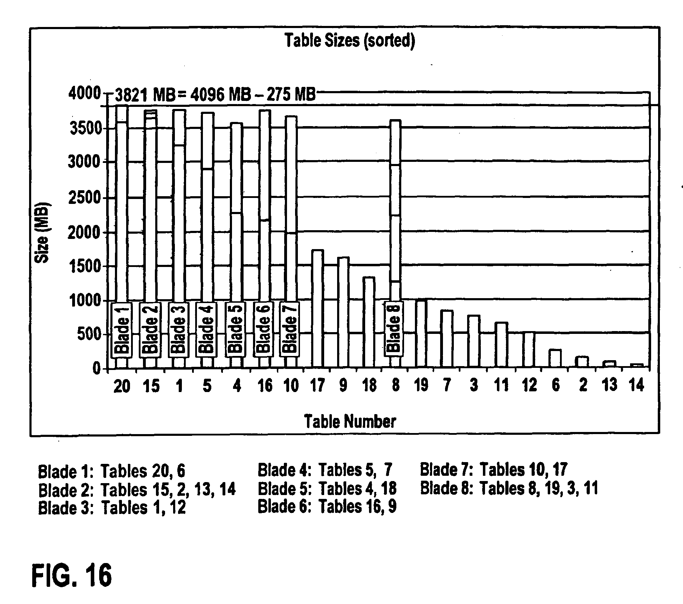

Figure 16         Is illustrative of the result of the renewed performance of the procedure of figure 5 with the lower threshold,

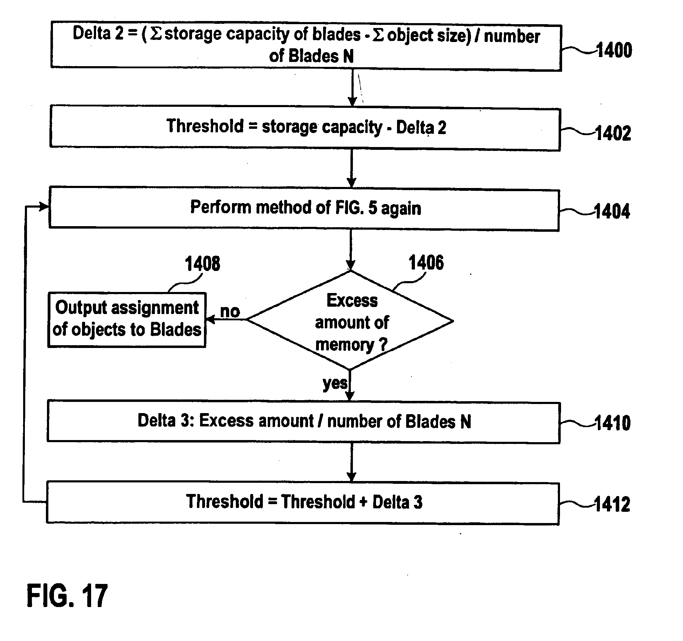

Figure 17         Is illustrative of another embodiment of a one-dimensional procedure for refinement of the distribution whereby the threshold is varied iteratively,

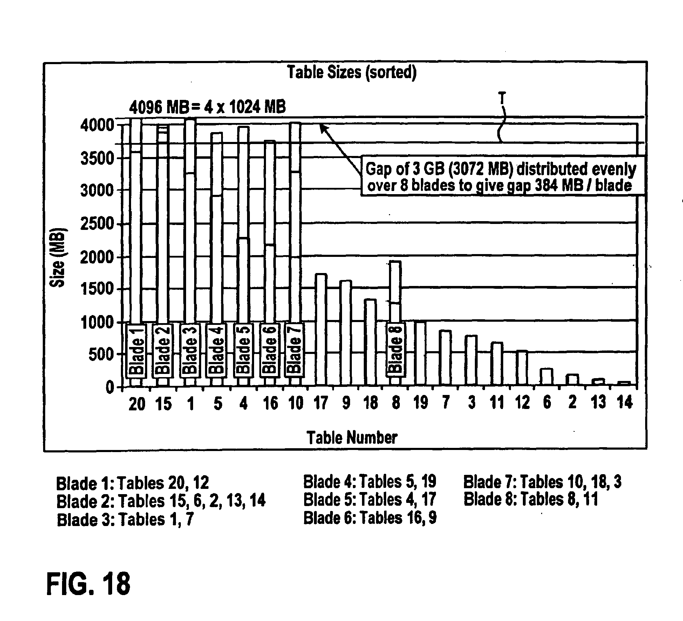

Figure 18         Is illustrative of the starting point of the first iteration for performing the method of figure 17,

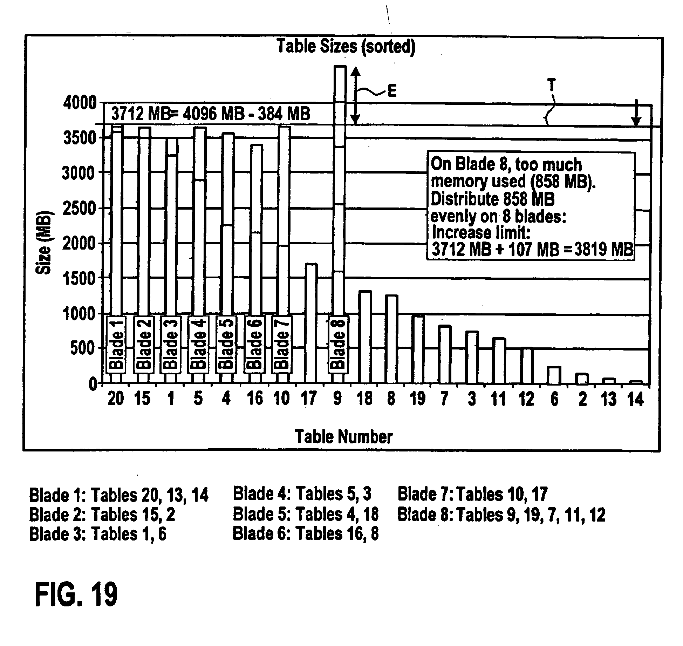

Figure 19         Shows the result of the first iteration,

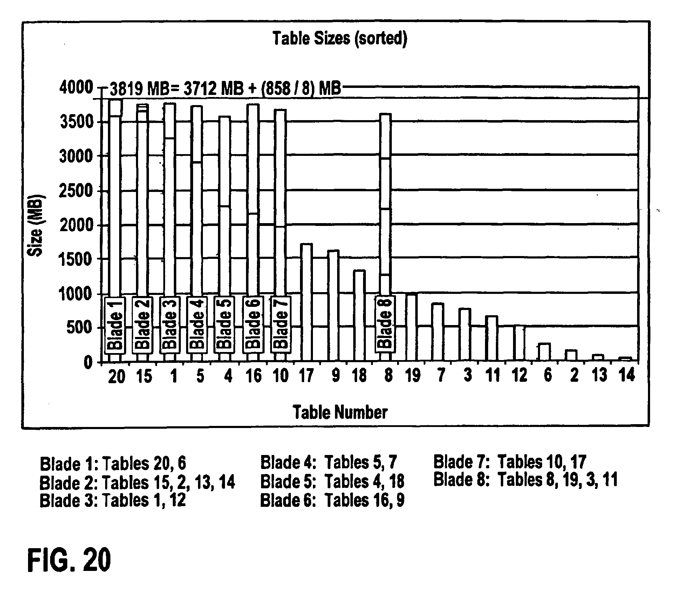

Figure 20         Shows the resulting assignment of objects to the minimum number of blades after completion of the procedure of figure 17,

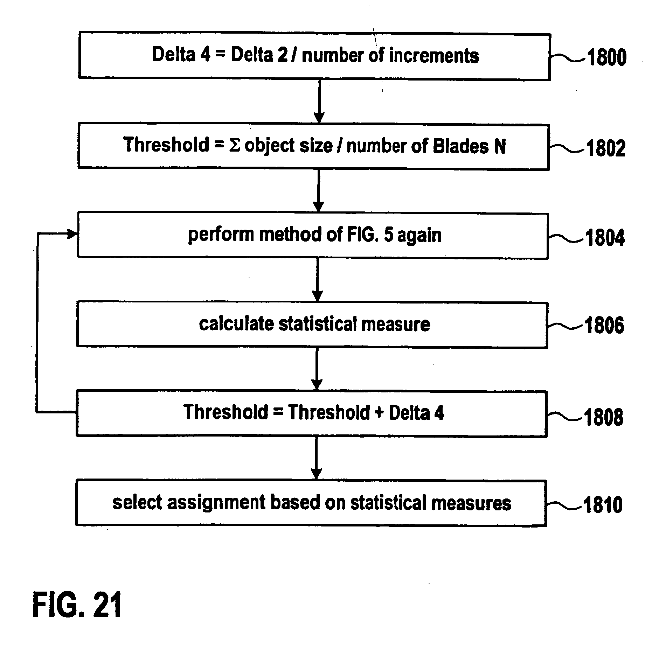

Figure 21         Is illustrative of a further preferred embodiment of a one-dimensional procedure for refinement of the distribution,

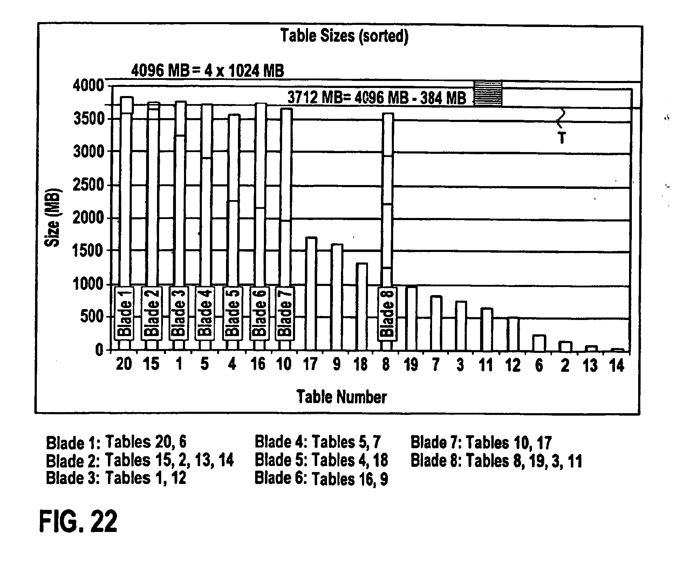

Figure 22         Is illustrative of the discrete continuum in which the threshold is varied and the result of the assignment procedure obtained by means of the one-dimensional procedure of figure 21,

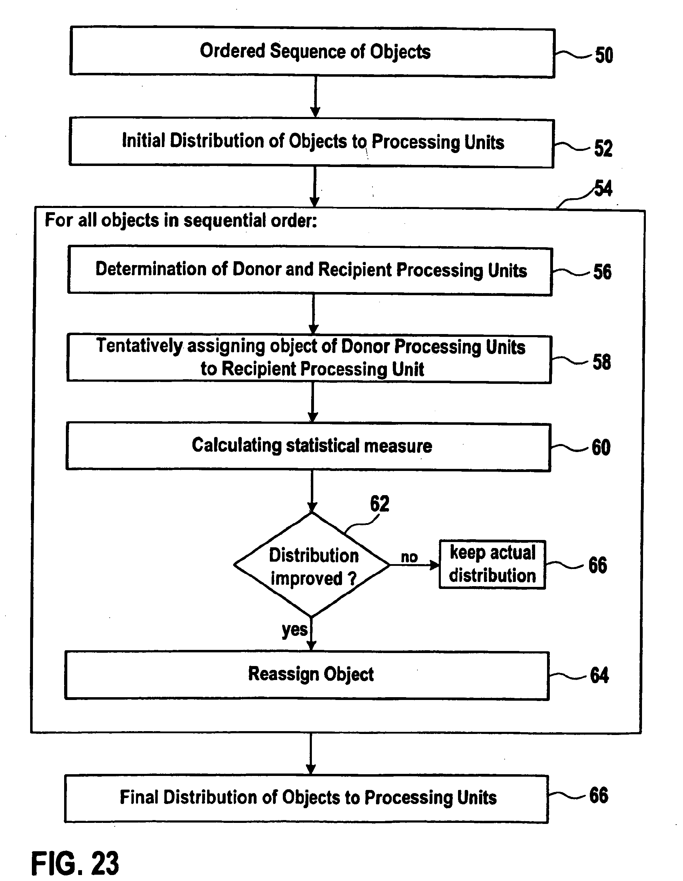

Figure 23         Shows a flowchart of a further preferred embodiment of a one-dimensional re-distribution procedure,

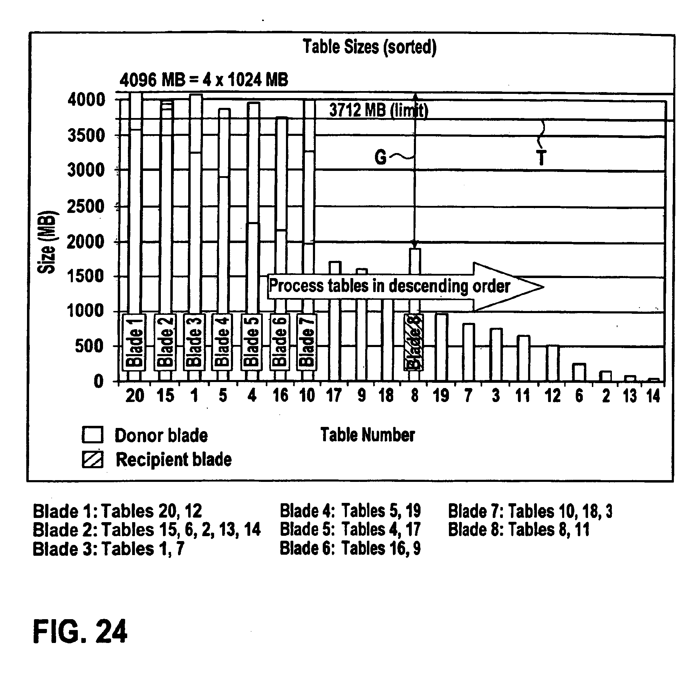

Figure 24         Is illustrative of the differentiation between a donor and recipient blade in the initial distribution on which the re-distribution procedure of figure 23 is carried out,

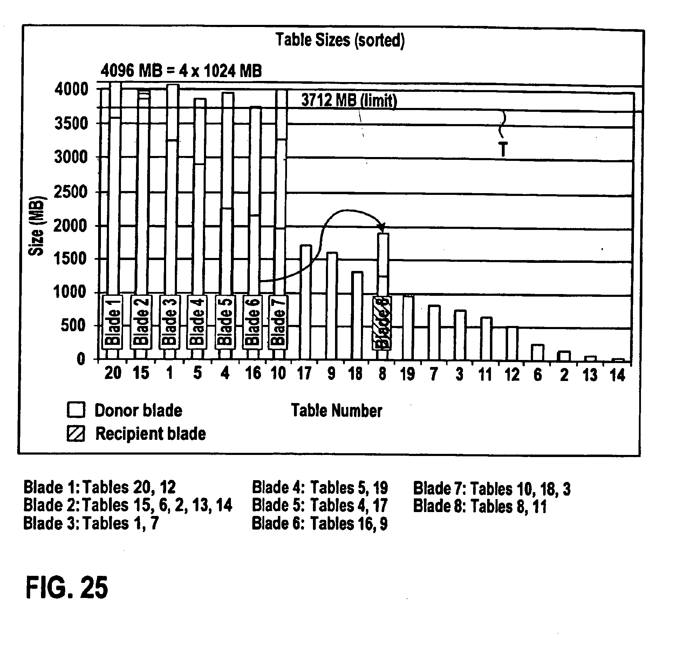

Figure 25         Is illustrative of a tentative assignment of table 16 to blade 8,

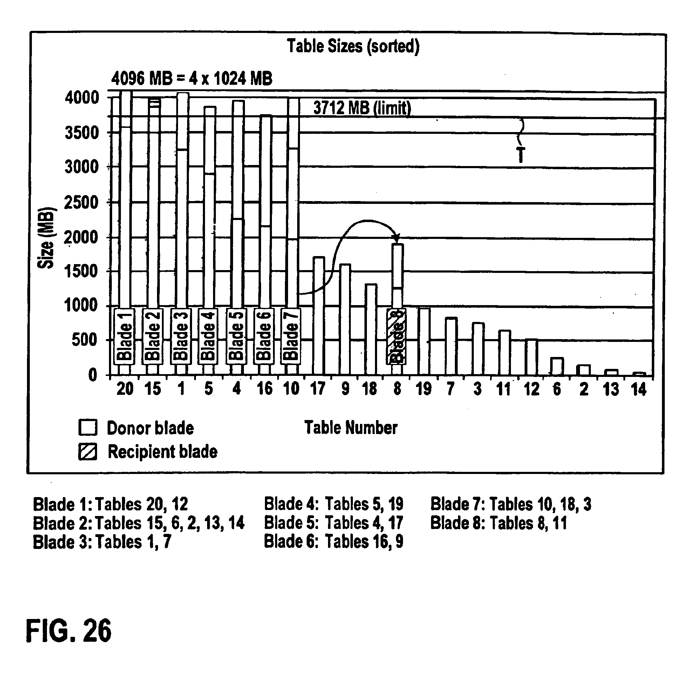

Figure 26         Is illustrative of the tentative re-assignment of table 10 from blade 7 to blade 8,

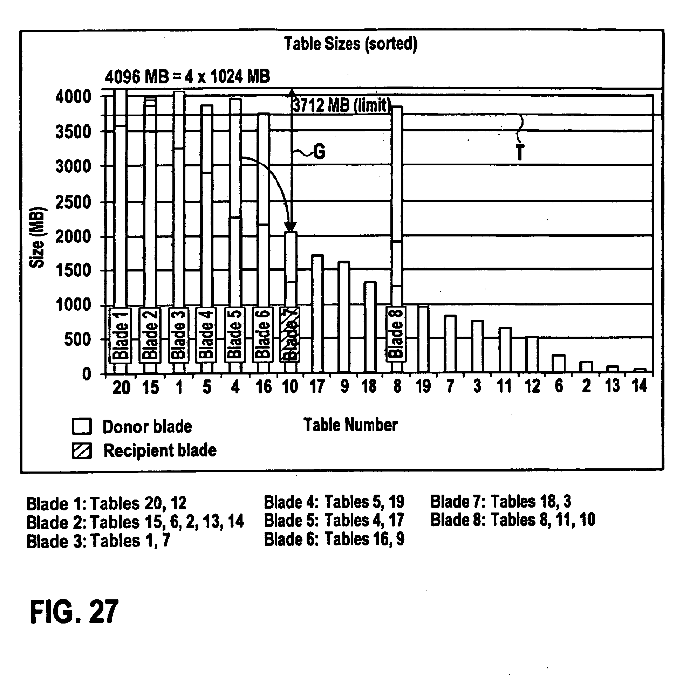

Figure 27         Is illustrative of the tentative re-assignment of blade 17 from blade 5 to blade 7,

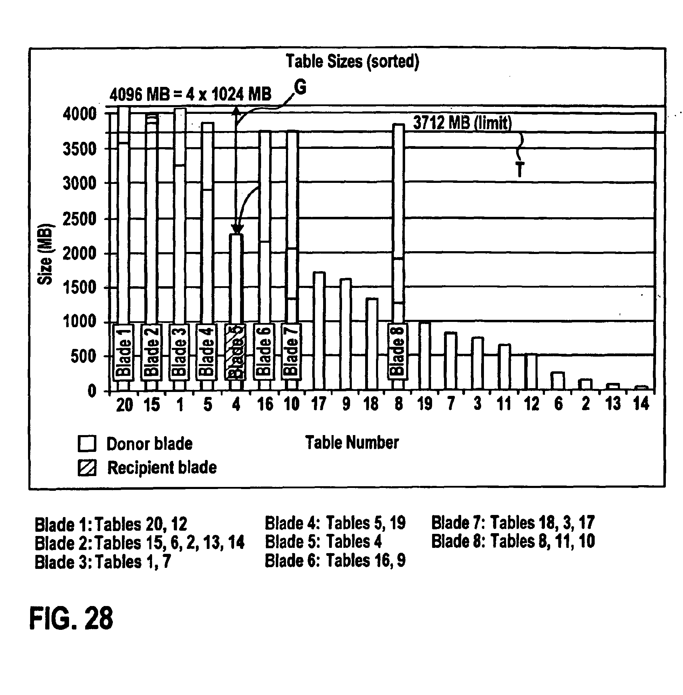

Figure 28         Is illustrative of a situation where there is no sufficient remaining storage capacity of a recipient blade,

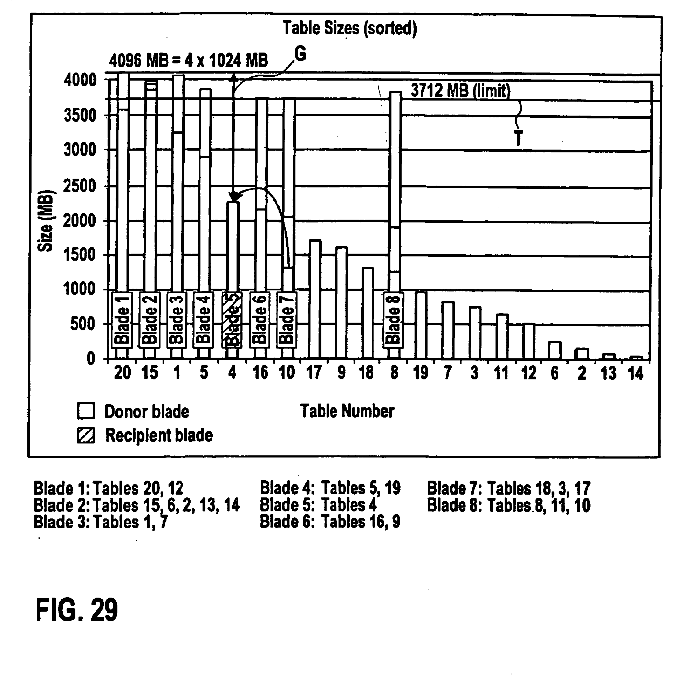

Figure 29         Is illustrative of a tentative re-assignment of table 18 from blade 7 to blade 5,

Figure 18          Is illustrative of a tentative re-assignment of table 8 from blade 8 to blade 7,

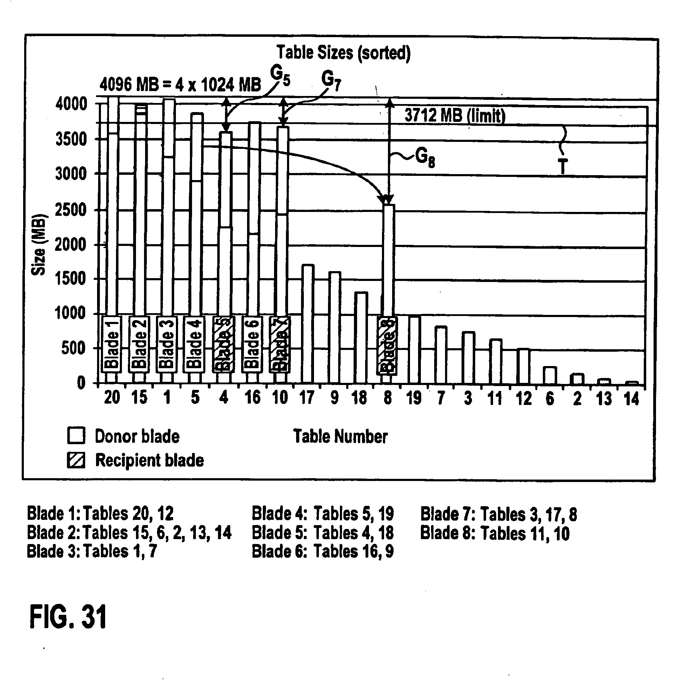

Figure 31          Is illustrative of a tentative re-assignment of table 19 from blade 4 to blade 8,

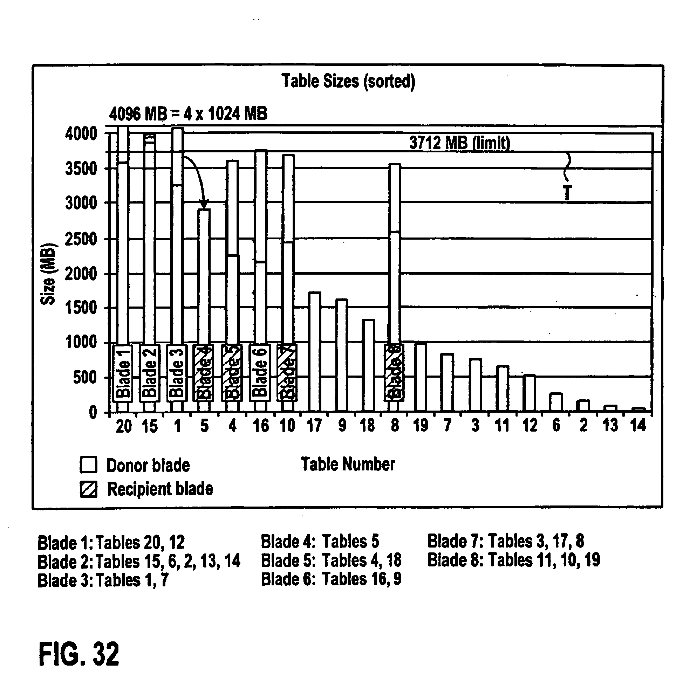

Figure 32          Is illustrative of a tentative re-assignment of table 7 from blade 3 to blade 4,

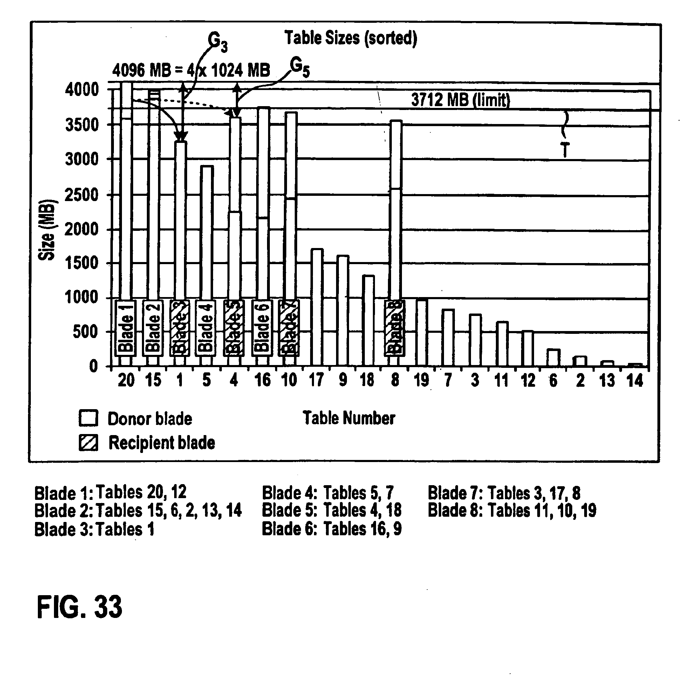

Figure 33          Is illustrative of a tentative re-assignment of table 12 to recipient blades 3 and 5,

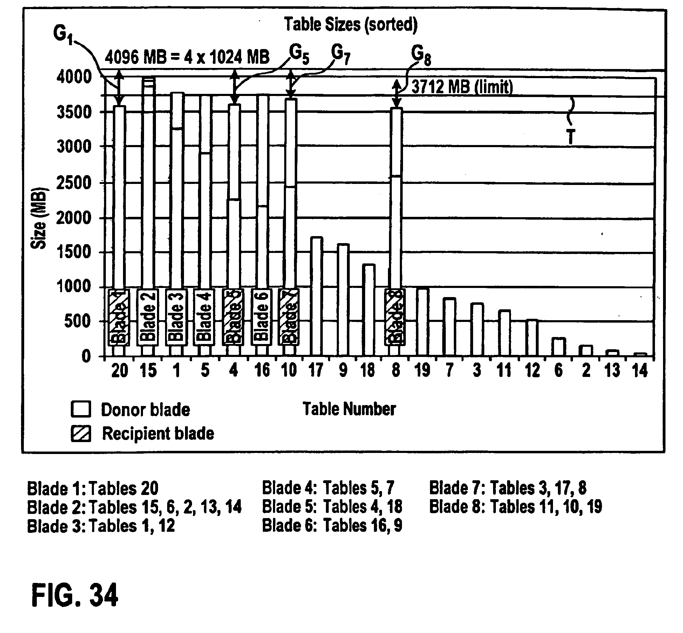

Figure 34          Is illustrative of multiple tentative re-assignments of table 6 to blades 1, 5, 7, and 8,

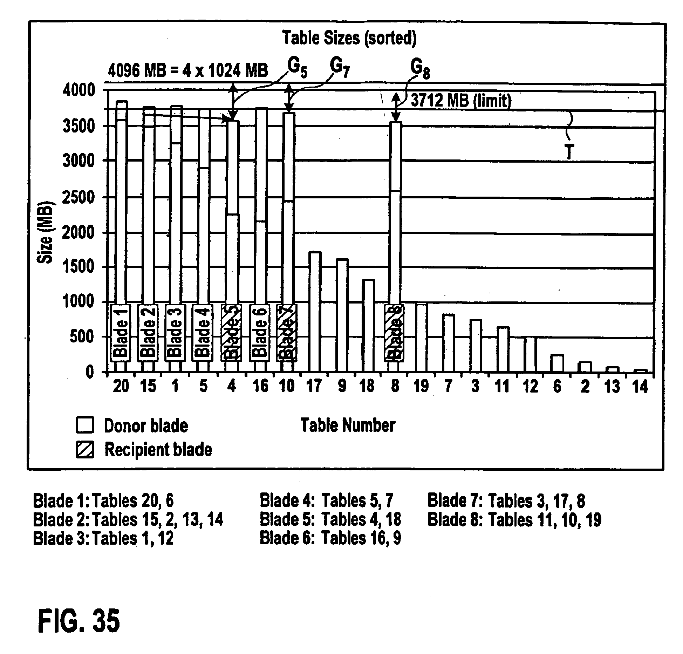

Figure 35          Shows the final re-distribution of tables to blades that is obtained by means of the method of figure 23,

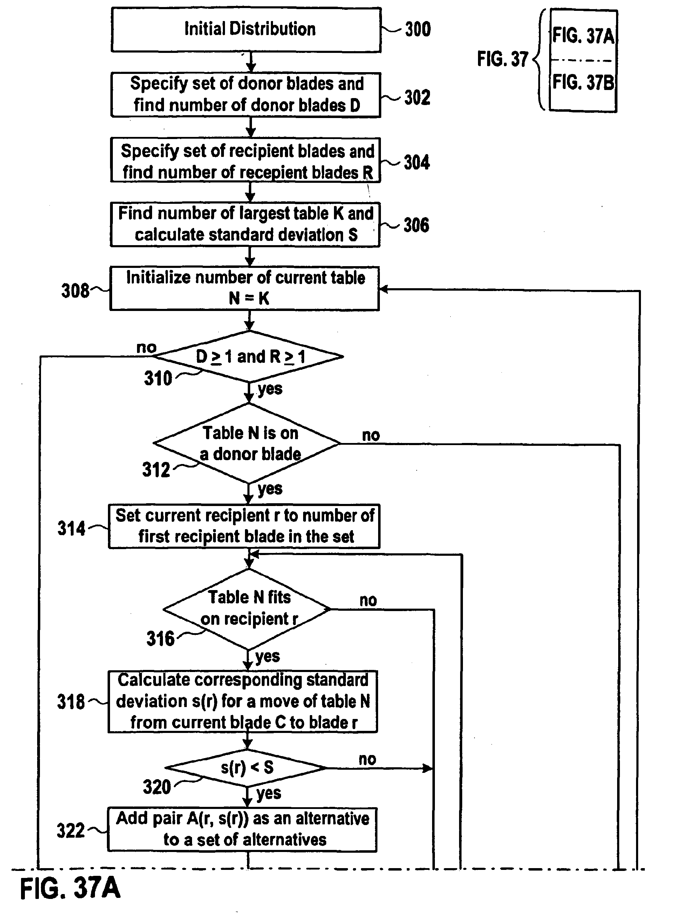

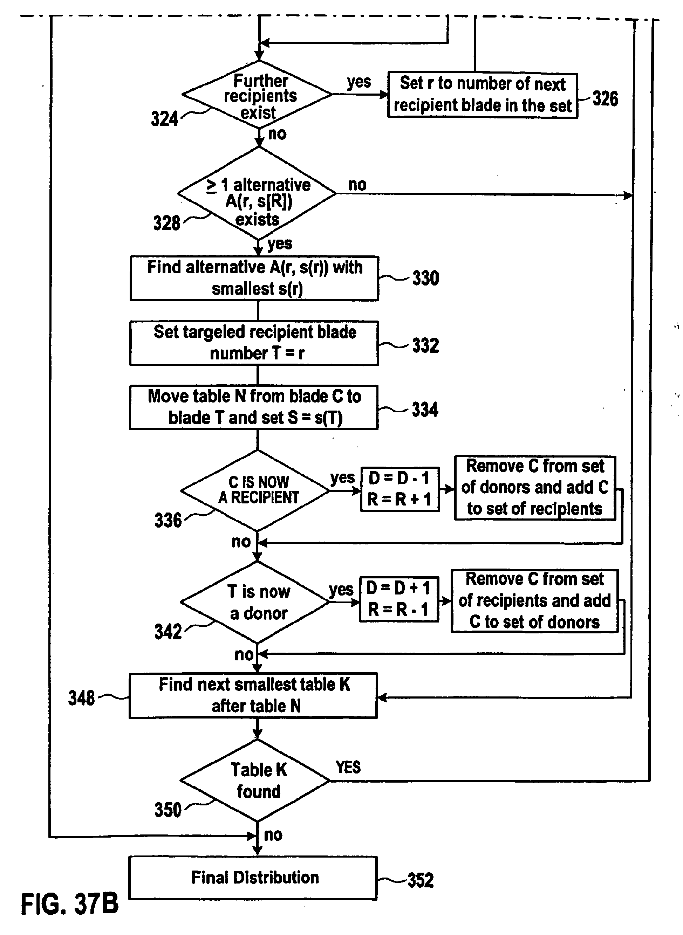

Figure 37          Is illustrative of a flow diagram of a more detailed embodiment of the one-dimensional re-distribution procedure,

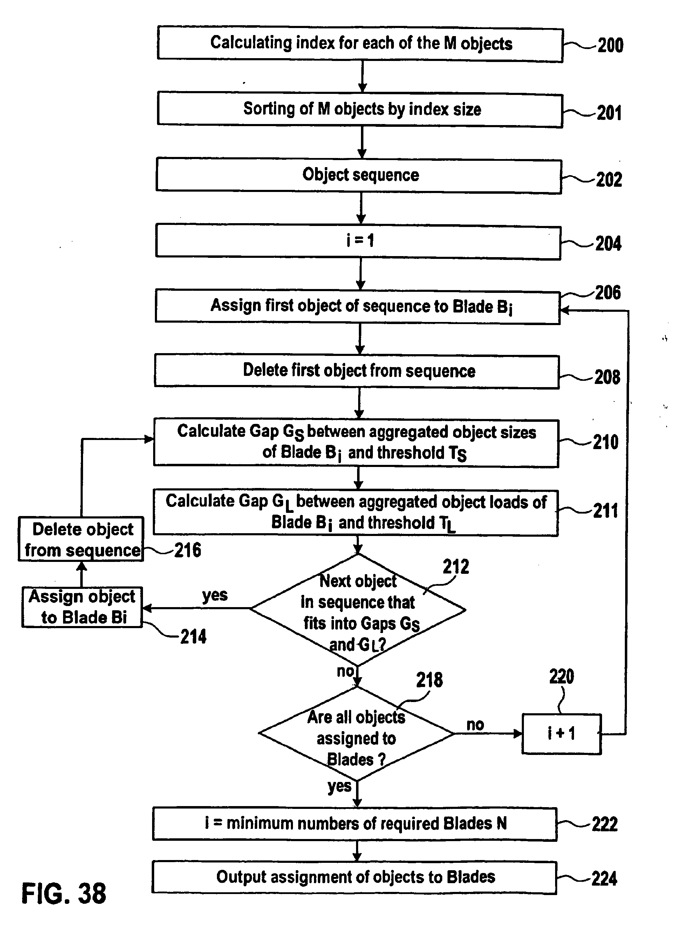

Figure 38          Is a flow diagram for a two-dimensional distribution procedure for determining the minimum number of the blades and for distributing of data objects to the minimum number of the blades,

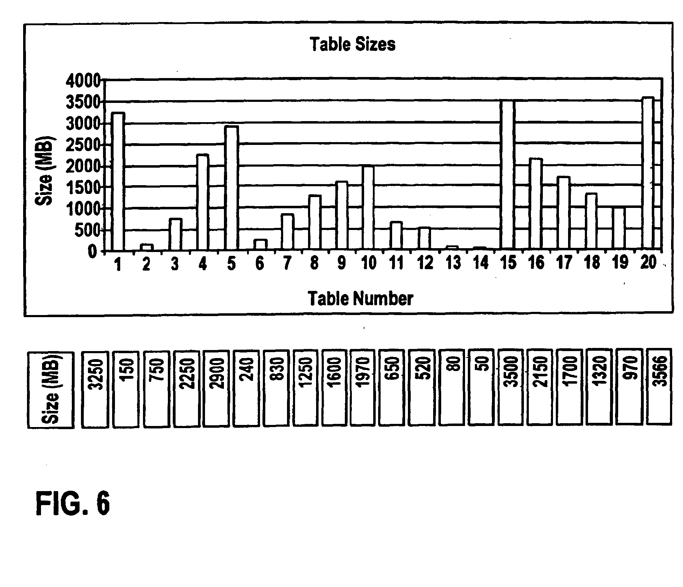

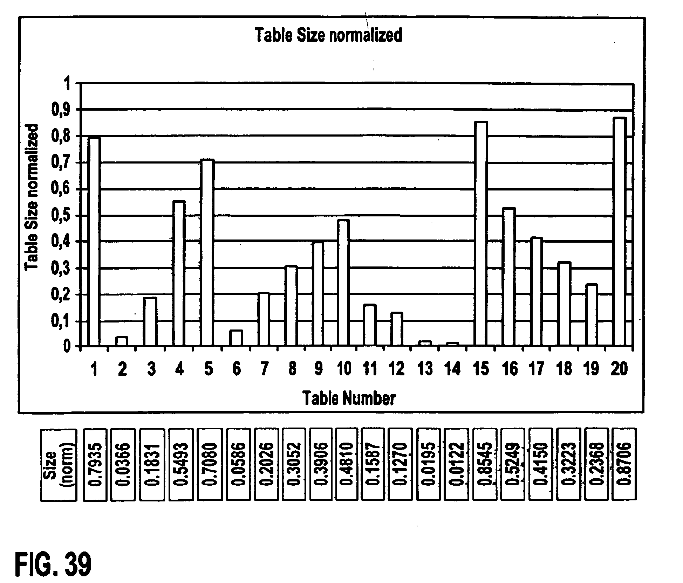

Figure 39          Shows the normalised size distribution of the tables of figure 6,

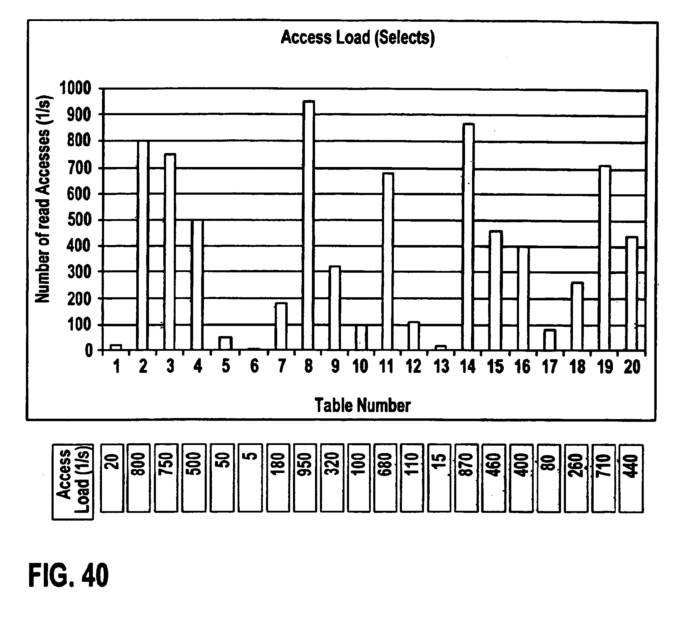

Figure 40          Shows the loads of the tables and terms of the mean number of read accesses per second,

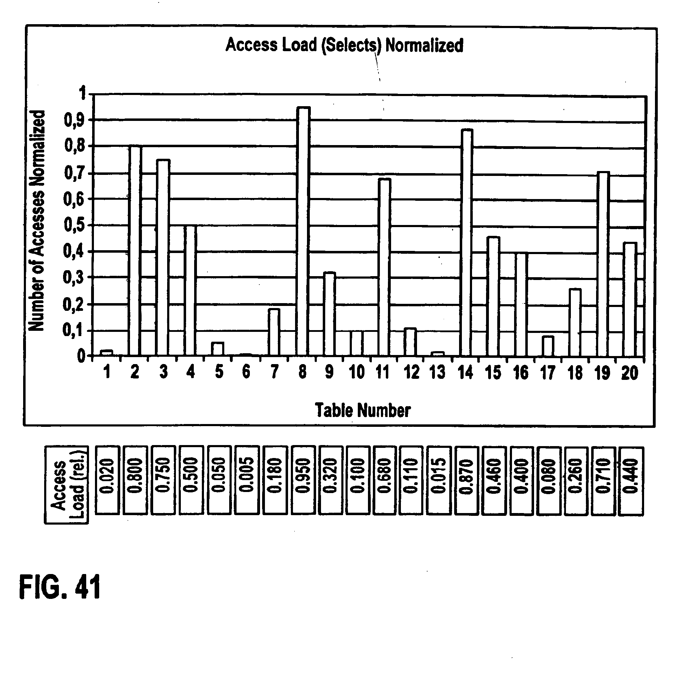

Figure 41          Shows the normalised loads,

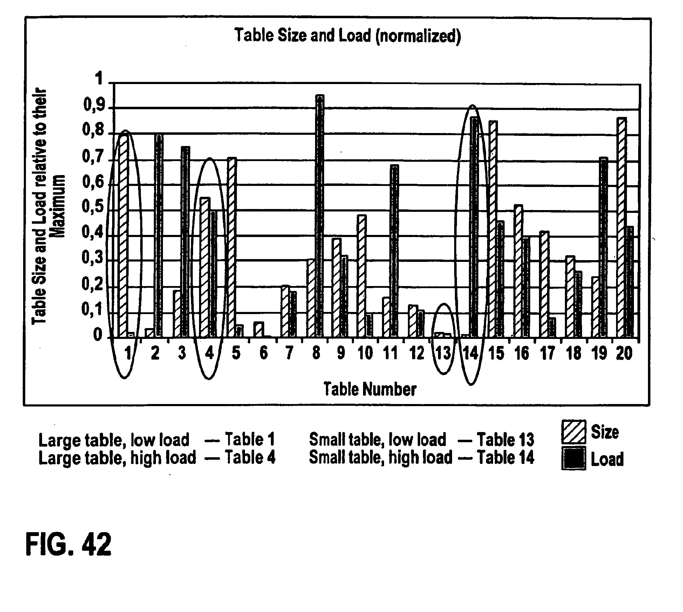

Figure 42          Shows the normalised sizes and loads per table,

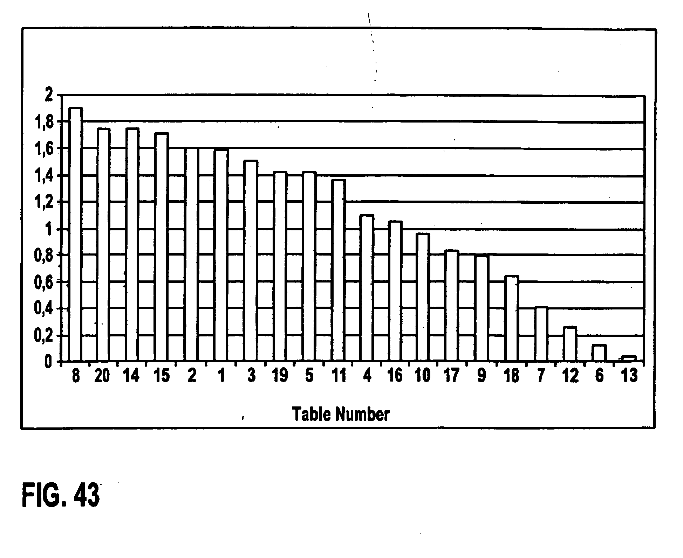

Figure 43          Shows a sorted sequence of the tables,

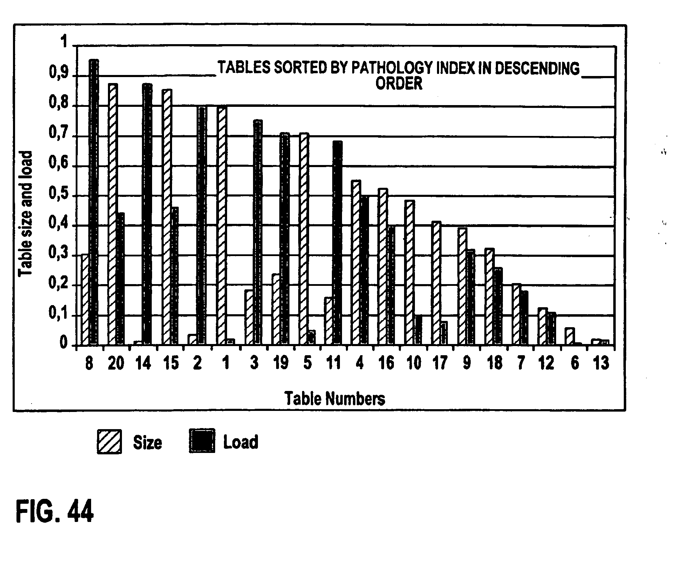

Figure 44          Shows the sorted sequence of the tables illustrating the normalised sizes and loads of each table,

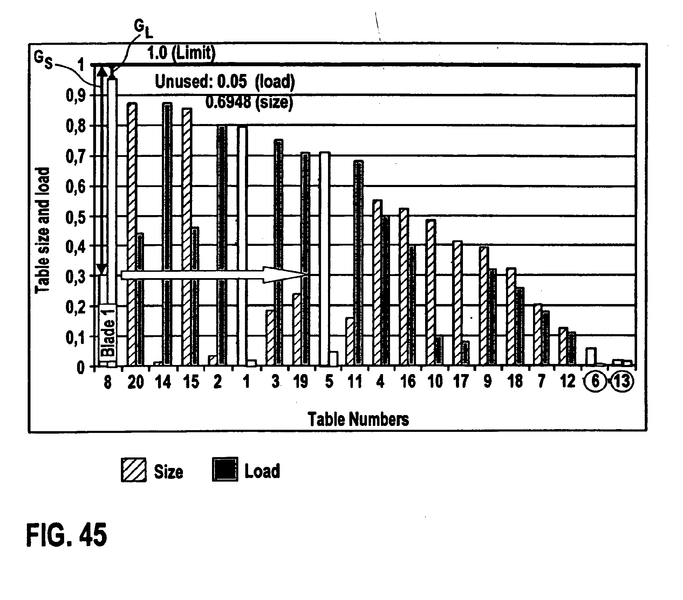

Figures 45 to 49   Show the assignment of tables to blade 1 of the cluster or blades,

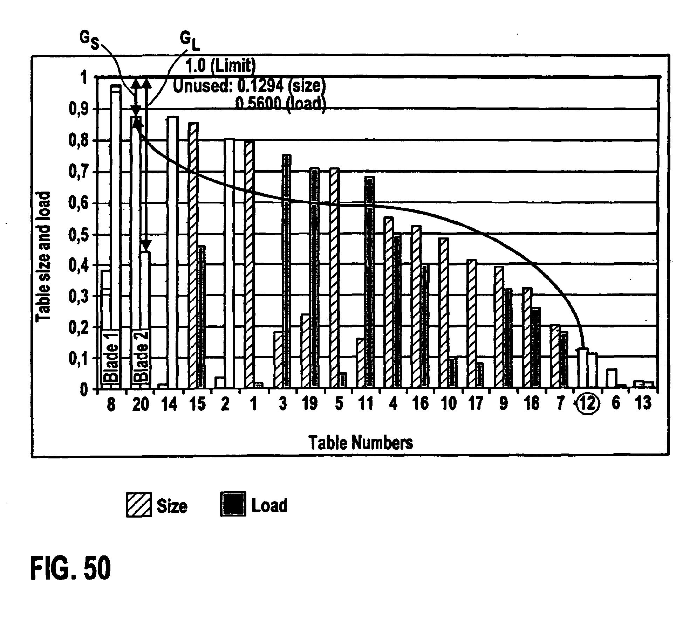

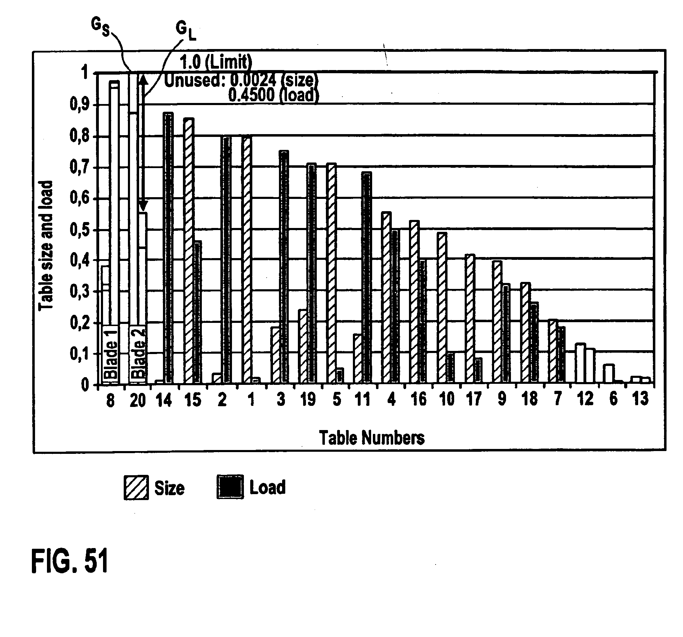

Figure 50 and 51   Show the assignment of tables to blade 2,

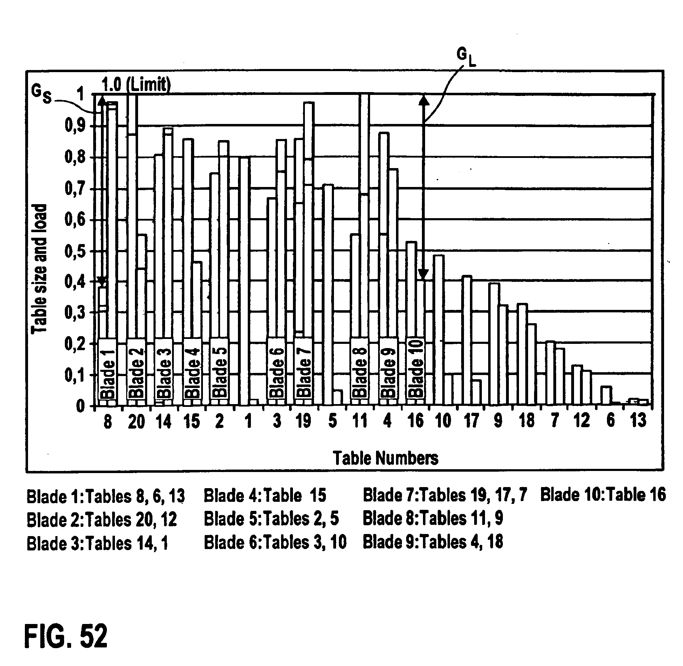

Figure 52          Shows the resulting assignment of tables to blades that is obtained on the basis of the method of figure 38.

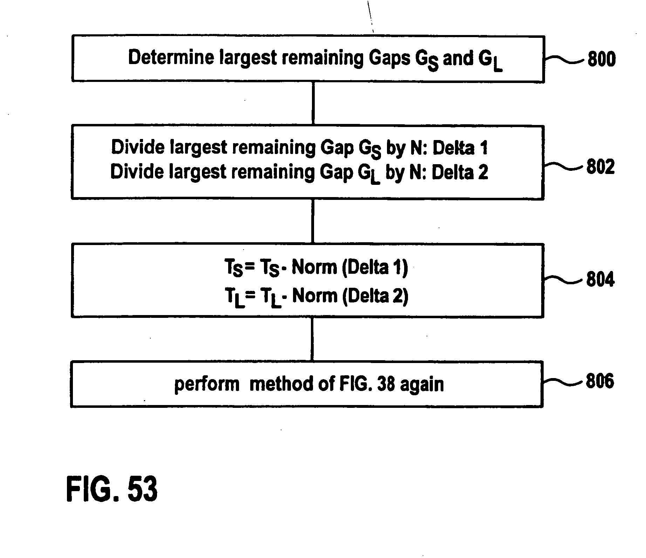

Figure 53          Is illustrative of a two-dimensional re-distribution method for refinement of the distribution obtained by performing the method of figure 38,

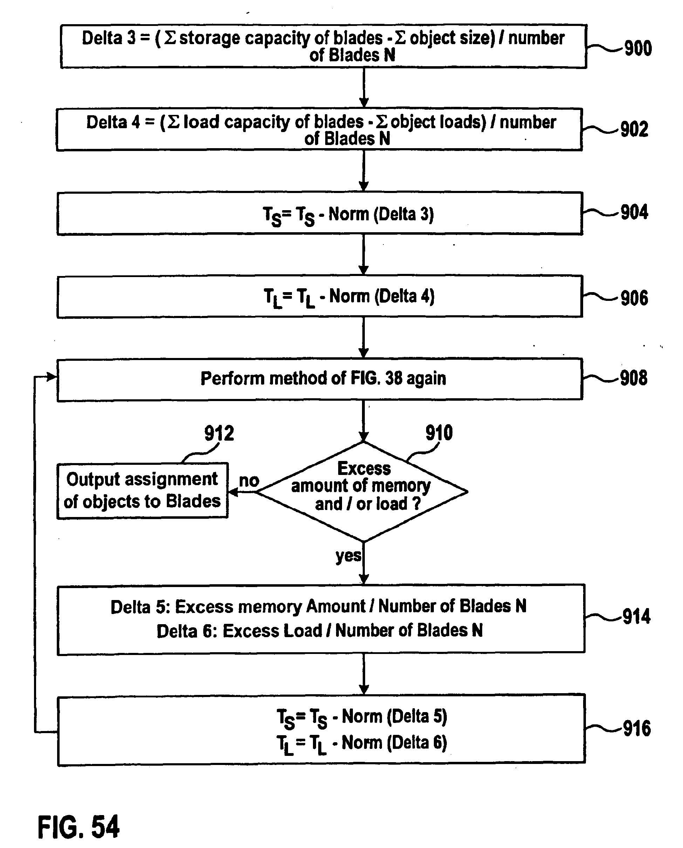

Figure 54          Is illustrative of a further preferred embodiment of a two-dimensional re-distribution method where the load and the size threshold are varied iteratively,

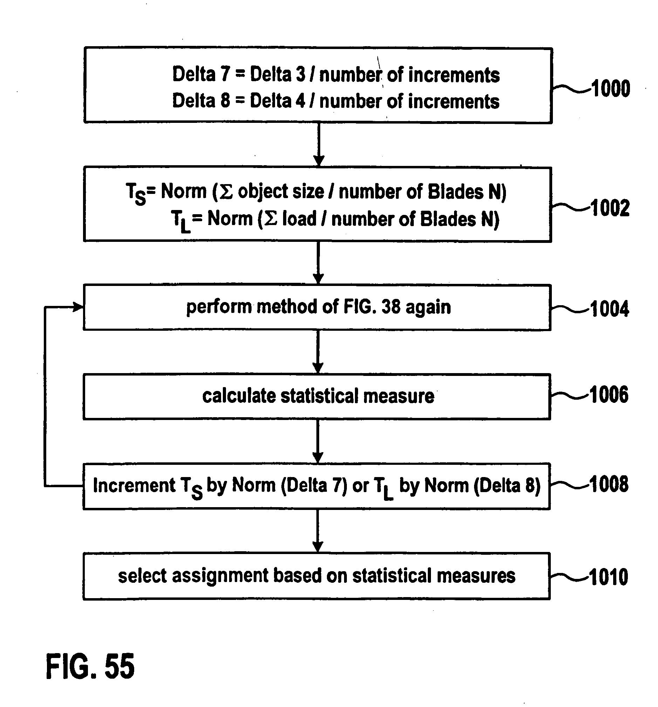

Figure 55          Is illustrative of a further preferred embodiment of the two-dimensional re-distribution procedure where the size and load thresholds are varied in pre-determined increments or decrements.

## Detailed Description

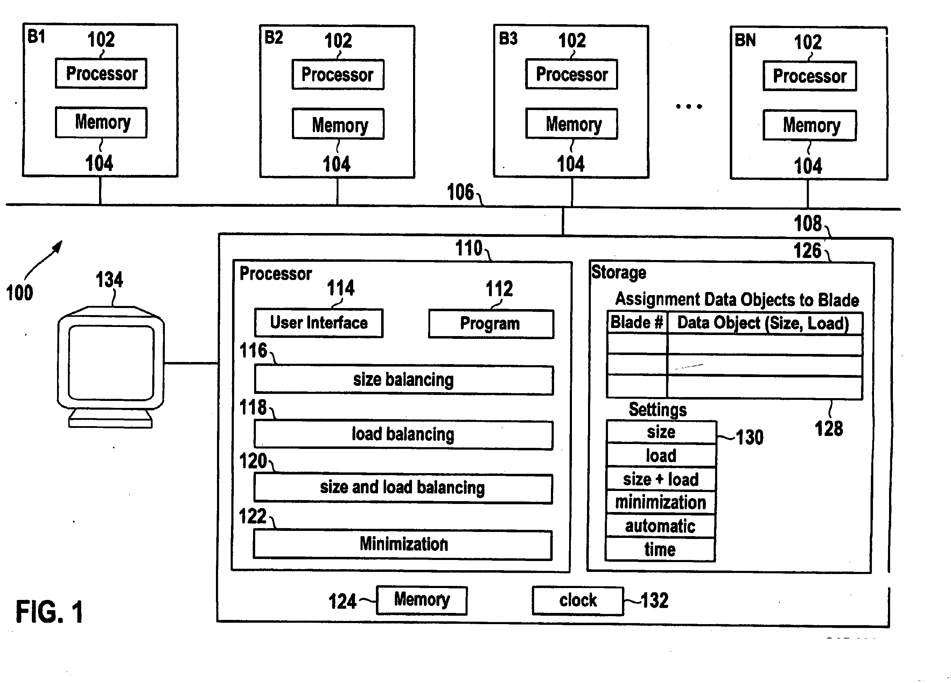

Figure 1 shows cluster 100 of blades B1, B2, B3, ... BN. Each one of the blades has a processor 102 and a memory 104. In the example considered here, all memories 104 have the same storage capacity and all processors 102 have the same load capacity.

For example, the load capacity of a processing unit can be indicative of the maximum number of access operations the processing unit can provide. Access operations may comprise both read accesses (select) and write accesses (update, insert, delete) to objects stored on the processing unit. In addition to hardware restrictions, the load capacity of a processing unit can be further limited by the parallel process of the distributed data processing task that is assigned to a given processing unit in terms of the maximum number of access operations the parallel process (for example of a search engine) can handle. For example the load capacity can be expressed as the maximum number of access operations per time unit the parallel process running on one of the processing units can handle.

The blades are coupled by a network 106, such as a bus system. The total number N of blades of cluster 100 needs to be chosen, such that a given number of M objects of varying sizes and load requirements can be handled.

For example, cluster 100 implements a so-called search engine. In this instance identical search processes run on each of the blades. The assignment of data objects, such as index tables, to blades can be stored in a dispatcher unit of cluster 100. This way data objects are assigned to blades and data processing tasks running on the blades.

In the preferred embodiment considered here a management unit 108 is coupled to the network 106. The management unit 108 provides a blade management engine and the dispatcher functionality for assigning data objects to the blades. In the embodiment considered here the management unit 108 is not itself a blade. However, in other implementations the management unit 108 can be implemented by one of the blades.

The management unit 108 has a processor 110 for execution of a program module 112 that provides a blade management engine, including blade diagnostics and blade failure management as well as deployment management, such as dispatching of data objects to the blades for implementation of a distribution of the data objects over the blades.

Further, processor 110 has a program module 114 that provides a user interface.

Program modules 116 and 118 implement one-dimensional distribution procedures for determining a distribution of the objects over the blades. The program module 116 takes into account the sizes of the objects to be distributed in order to balance the distribution. Likewise, program module 118 takes into account the loads of the data objects in order to perform the distribution procedure. Preferably, program modules 116 and 118 are replaced by a single program module that implements a generic procedure that can be used for both the size or load one-dimensional distribution or for another one-dimensional distribution taking into account a single other parameter.

Program module 120 implements a two-dimensional distribution procedure that takes into account both size and load of the objects to be distributed.

The common aim of the distribution procedures implemented in the program modules 116, 118 and 120 is to provide a balanced distribution that at least approximates an even distribution of the objects over the processing units. The program module 120 can take into account both size and load as a balancing criterion or a single criterion such as load or size, depending on the user's choice or pre-defined settings.

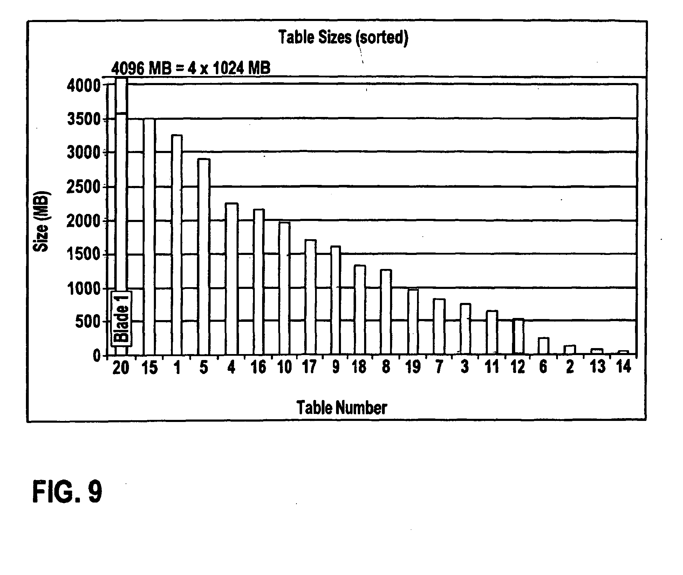

Program module 122 implements a procedure for determining a minimum number of the blades that are required to accommodate a given set of objects. Depending on a user's option the minimisation procedure can be one-dimensional or two-dimensional. In the one-dimensional case the minimisation procedure only takes into account size or load in order to determine the minimum number of the blades. In the two-dimensional case both size and load are taken into account in order to determine the minimum number of processing units. It is to be noted that the program module 122 does not necessarily provide the absolute minimum number of the processing units but an approximation to this minimum number of processing units. Further, it is to be noted that - depending on the implementation - a separated program module 122 might not be required but that the program modules 116, 118 and 120 provide the minimum number as a result of the distribution procedure. In addition the processor can execute program modules (not shown in the drawing) for refinement of an initial distribution. Suitable procedures will be described in greater detail below with reference to Figures 5 to 55.

Management unit 108 has main memory 124 and storage 126, such as a disc drive.

Storage 126 serves for storage of a table 128. Each table entry assigns one or more data objects to one of the blades. Further, the size and load parameters of each of the data objects are stored in the table 128.

Further, the storage 126 serves for storage of a table 130 that contains the user settings regarding the mode of operation of the management unit 108.

Clock 132 of the management unit 108 provides a time reference. A monitor 134 is coupled to the management unit 108 in order to provide a graphical user interface in conjunction with program module 114.

In operation, a list of data objects indicating the size and the load required by each of the data objects is loaded into the table 128. Initially the data objects are not assigned to the search engine processes running on the blades. In order to perform the initial assignment of data objects to blades one of the program modules 116, 118, 120 is started, depending on the settings stored in table 130. If the 'minimisation' setting has been entered the program module 122 is started before the distribution of the data objects over the blades is determined. Otherwise the data objects are distributed over all available blades B1 to BN.

In addition to the initial assignment of data objects to blades the management unit 108 can also be utilised for performing a re-distribution of the data objects during operation of the cluster 100. Such a re-distribution is beneficial as the size of the data objects usually changes over time and/or users of a specific application are added such that the evenness of the distribution can be improved by re-distributing the objects from time to time.

A re-distribution procedure can be initiated manually by an administrator or it can be performed at pre-programmed points of time. If the 'automatic' setting has been selected and stored in the table 130 the time reference provided by clock 132 is compared with the 'time' setting stored in the table 130. When the current system time as provided by clock 132 is identical with the 'time' setting, the re-distribution procedure is initiated automatically. Preferably this is done daily or at shorter or at longer time intervals depending on the change dynamic of the data objects.

The user interface 114 can provide a visualisation of the current distribution of the data objects over the blades as well as a visualisation of a suggested re-distribution of the data objects over the blades. This allows an administrator to review a re-distribution of data objects over the blades that has been calculated by one of the program modules 116, 118, or 120 before it is actually applied to the blades.

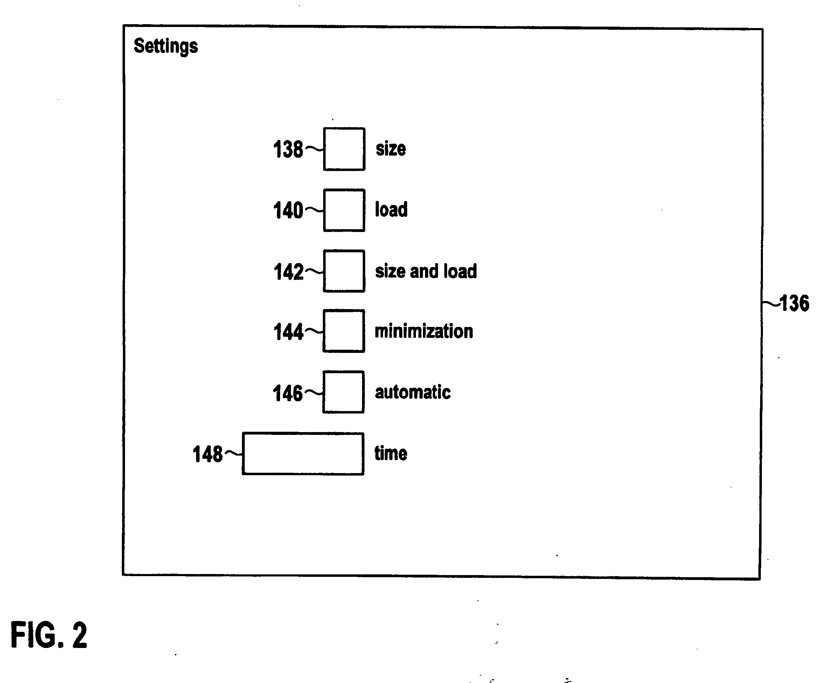

Figure 2 shows a window 136 that is generated by the program module 114 and displayed on monitor 134 for an administrator's entry of settings that determine the mode of operation of the management unit 108. The window 136 has radio-buttons 138 to 142 and check-boxes 144 and 146. Radio-button 138 serves for selection of the program module 116 that implements the one-dimensional size balancing procedure for distributing the data objects over the blades. Radio-button 140 serves for selection of the program module 118 that takes into account the load parameters of the objects for the distribution procedure. Radio-button 142 serves for selection of the program module 120 that takes into account both size and load. Only one of the radio-buttons 138 to 142 can be pressed down at a time as the corresponding selections are mutually exclusive.

Check-box 144 serves for selection of the minimisation option, i.e. the execution of program module 122 for the determination of a minimum number of blades that are required before one of the program modules 116 to 120 is executed for distribution of the data objects over the minimum number of blades as determined by the program module 122.

Check-box 146 serves to select the 'automatic' option, i.e. the automatic initiation of the re-distribution procedure. Entry field 148 serves for entry of a time when the automatic re-distribution procedure is to be initiated.

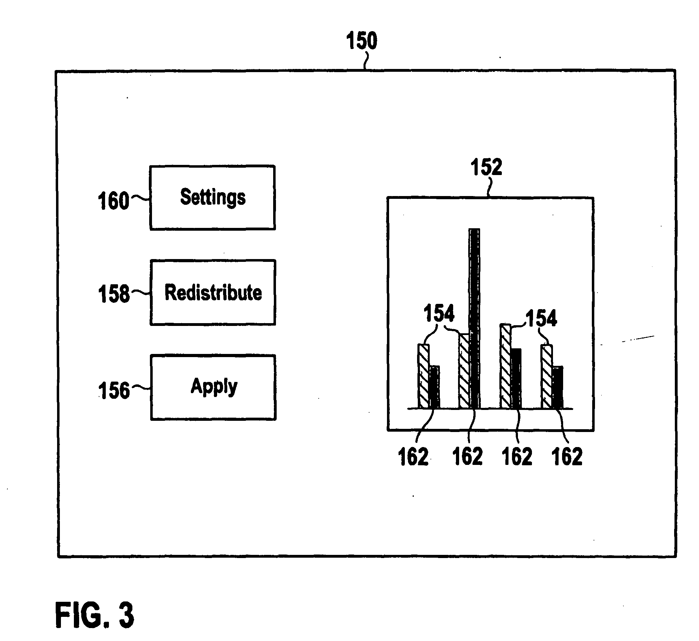

Figure 3 shows a window 150 that is generated by program module 114 in the manual mode. Window 150 shows a diagram 152 that visualises the current distribution of data objects over the blades by means of bars 154.

Window 150 contains virtual buttons 156, 158 and 160. When the administrator clicks on button 158 a re-distribution procedure is initiated in accordance with the settings stored in the table 130 (cf. figure 1). The result of the re-distribution procedure is also visualised in the diagram 152 by means of bars 162. If the administrator approves the suggested re-distribution he or she presses the button 156 in order to apply the re-distribution to the blades.

If the administrator is of the opinion that the suggested re-distribution as visualised within a diagram 152 is not good enough, he or she can press on button 160 which opens window 136 as shown in figure 2. After having changed the settings the administrator can go back to the window 150 and enter a request for another suggestion for a re-distribution by pressing button 158.

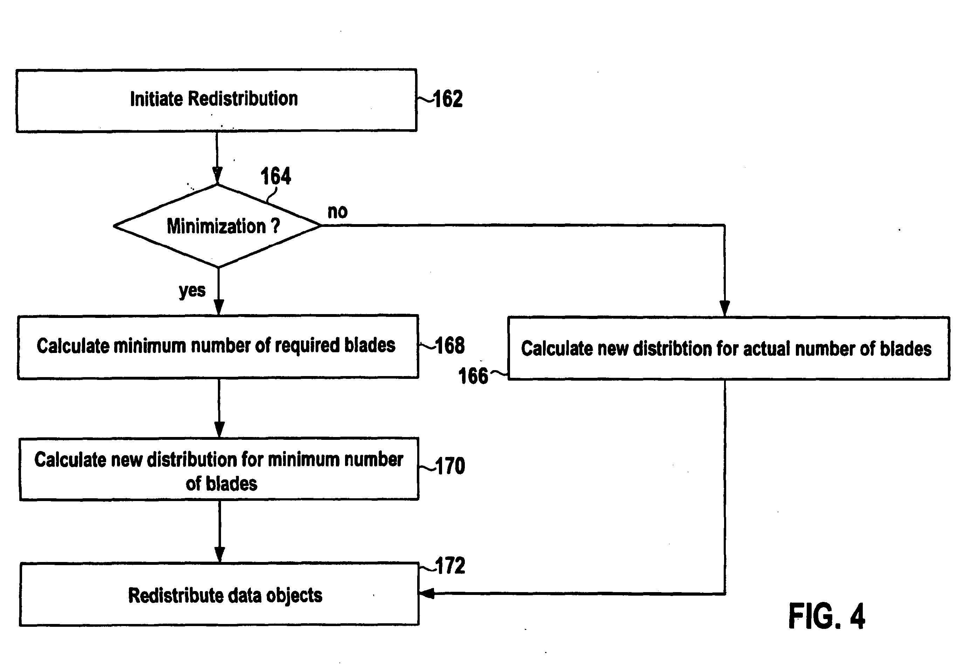

Figure 4 shows a corresponding flow chart. In step 162 a request for initiation of a re-distribution procedure is received. This can be due to a manual input of the request by the administrator or due to an automatic request that is made by the program 112 when the system time provided by the clock 132 equals the 'time' setting as stored in the table 130 (cf. figure 1).

In step 164 it is checked whether the minimisation 'setting' is stored in the table 130. If this is not the case one of the program modules 116, 118 or 120 is executed in accordance with the settings in order to calculate a new distribution of the given number of objects over all of the available blades of the cluster 100 (step 166).

If the minimisation parameter is stored in the settings the control goes from step 164 to step 168 in order to calculate the minimum number of blades that are required to accommodate the given set of data objects. This calculation is performed by means of the program module 122. In step 170 the new distribution of the data objects over the blades is calculated for the minimum number of blades as determined in step 168. The remaining blades that are not required to accommodate the set of data objects can be assigned to another set of data objects or to other special data processing tasks. In step 172 the re-distribution of the data objects over the blades as determined in step 117 or in step 166 is applied.

In the following a number of preferred embodiments of the one-dimensional and the two-dimensional minimisation and distribution procedures are described in greater detail by way of example only.

Figure 5 shows a one-dimensional procedure for determining the minimum number N of blades that are required to accommodate a given set of data objects. This procedure can be implemented by the program module 122.

In step 201 a sorting operation is performed in order to sort the M objects by size. The corresponding object sequence is provided in step 202. In step 204 the index i for the blades is initialised to one.

In step 206 processing of the object sequence starts in the order starting with the largest object of the sequence. The first object of the sequence, which by definition is the largest object of the sequence, is assigned to blade $B_1$ in step 206. In step 208 the first object which has been assigned to blade $B_1$ is deleted from the sequence.

In step 210 the size of the objects, which have been already assigned, to blade $B_1$ is added up and a gap G between the aggregated object size and a threshold is calculated. When the assignment procedure of Fig. 5 is carried out for the first time, the threshold is the storage capacity of one of the blades.

In step 212 it is determined whether there remains an object in the sequence, which fits into the gap G. If this is the case, the largest of these objects is assigned to the blade $B_1$ in step 214 and deleted from the sequence before the control goes back to step 210.

If there is no such object which fits into the gap G, step 218 is carried out. In step 218 it is determined whether all objects have already been assigned to blades. In other words, in step 218 it is checked whether the sequence is empty. If this is not the case the index i is incremented in step 220 and the control goes back to step 206 to assign remaining objects of the sequence of the next blade $B_2$.

If the contrary is the case, the index i equals the minimum number N of blades which are required to handle the M objects. This number is outputted in step 222. The minimum number N of blades can be a basis for an investment decision for purchasing of a corresponding number of blades if the current number of available blades is insufficient. Further, the assignment of objects to blades is outputted in step 224 in order to visualize the quality of the object size balancing.

Figure 6 shows an example for a set of data objects to be distributed. In the example considered here the objects are a number of twenty different tables having various sizes between 50 MB and 3566 MB as indicated in figure 6. For example, table 1 has a size of 3250 MB, table 2 has 250 MB, table 3 has 750 MB, etc. The table sizes can be actual table sizes or average table sizes which have been obtained by monitoring a real life data processing system. Alternatively the table sizes are estimates for the purpose of planning cluster 100.

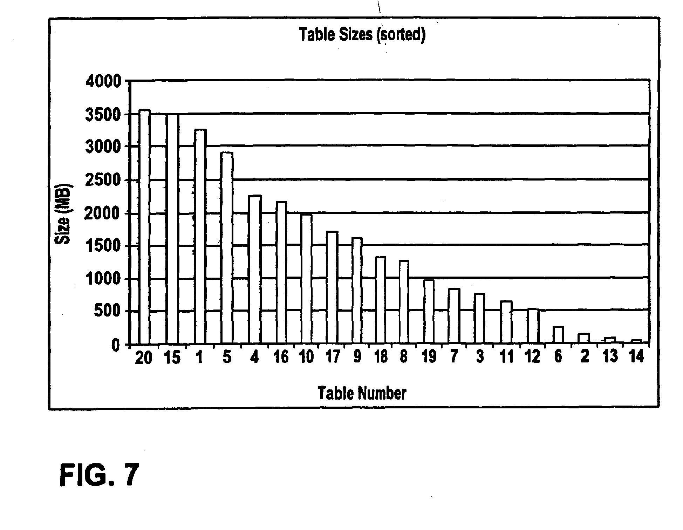

Figure 7 shows the result of the sorting operation performed on the tables 1 to 20 of figure 6 (cf. step 202 of figure 5).

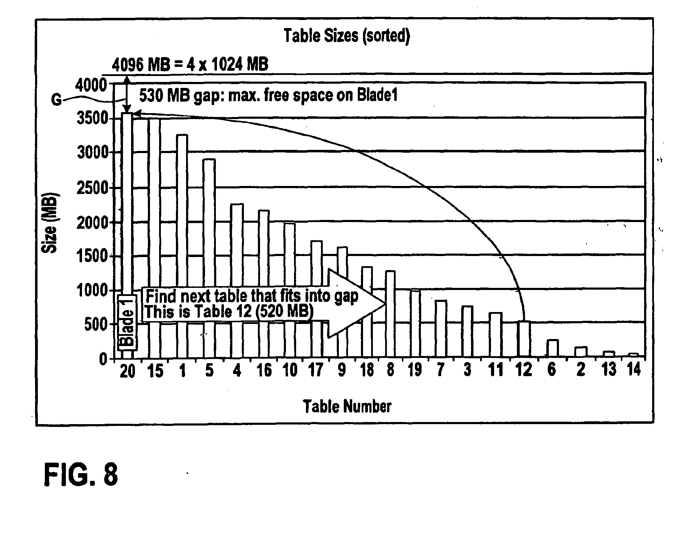

Figure 8 illustrates the assignment of the first object of the sequence, i.e. the largest table 20 to blade $B_1$. In the example considered here, each blade has a storage capacity of 4 GB = 4096 MB of main memory. Table 20 has a size of 2566 MB, which leaves a gap G of 530 MB of remaining storage capacity (cf. step 210 of figure 5).

Next it is determined whether there is a next object in the sequence which fits into the gap G. Table 12, which has a size of 520 MB is the largest table which fits into the gap G. This table 12 is thus also assigned to blade 1. The aggregated size of the objects assigned to blade 1, i.e. table 20 and table 12, is 4068 MB, which leaves a gap G of 10 MB. This gap G of 10 MB is too small to accommodate even the smallest remaining object of the sequence of tables.

As there remain tables in the sequence which have not yet been assigned to a blade the index i is incremented and the assignment procedure goes to the next blade $B_2$ (cf. steps 218 and 220 of figure 5). With respect to blade $B_2$ the above-explained procedure is carried out again on the basis of the unassigned tables, which remain in the sequence.

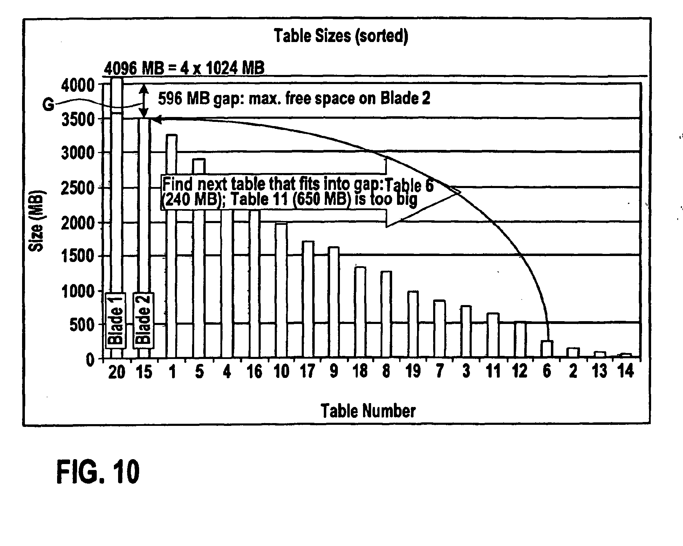

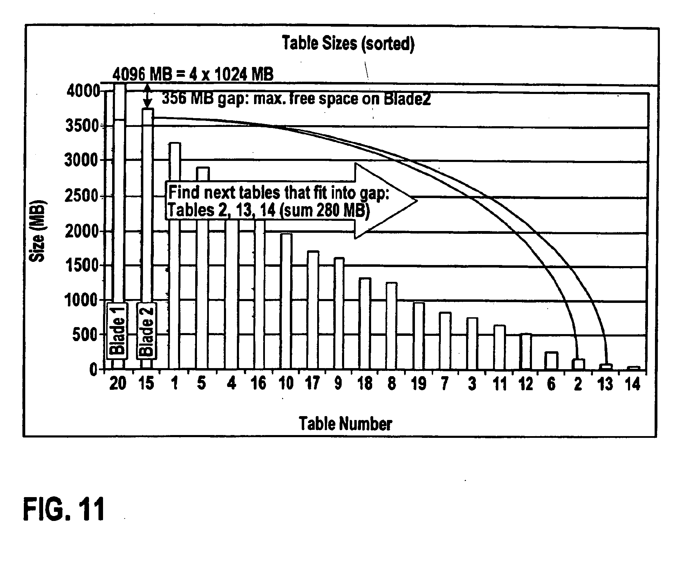

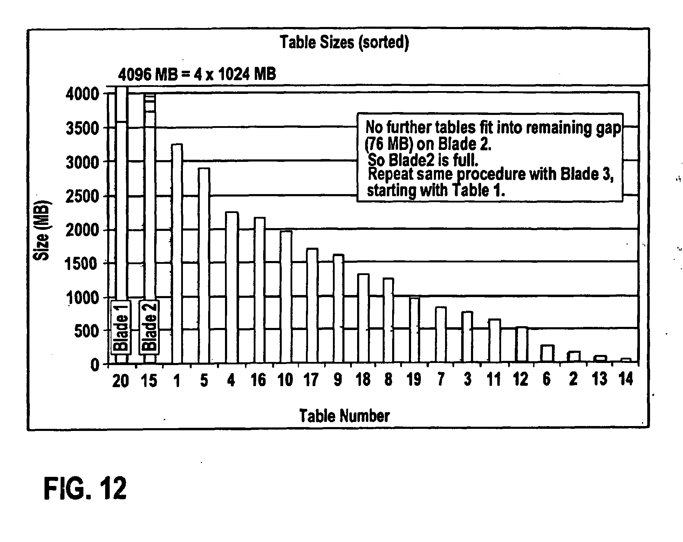

This way the largest remaining table of the sequence, i.e. table 15, is assigned to blade $B_2$ which leaves a gap G of 596 MB. The gap G is filled with tables 6, 2, 13 and 14 as illustrated in figures 10 and 11. The resulting assignment of tables to blade $B_2$ is shown in figure 12.

The aggregated size of the tables, which have been assigned to blade B2, i.e. tables 15, 6, 2, 13 and 14, leave a gap G of 76 MB which is not enough to accommodate the smallest unassigned table, i.e. table 11, of the sequence. Thus, the index i is incremented and the assignment procedure is continued for the next blade $B_3$. This process goes on until all tables of the sequence have been assigned to one blade $B_i$. The result of the assignments of tables to blades is illustrated in figure 13.

In addition to the assignment of tables to blades this way the minimum number N of blades, which are required for handling of the given number of tables (cf. figure 6), is obtained. In the example considered here, the resulting assignment of tables to the N = 8 blades leaves a gap G of 2196 MB on blade 8. In order to further improve the object size balancing the method of figure 14 is carried out.

In step 1100 the largest gap G is determined. In the example shown in figure 13, this is the gap G of blade $B_8$. The other blades $B_1$ to $B_7$ have smaller gaps between the aggregated size of the tables assigned to the corresponding blade and the storage capacity of 4 GB.

In step 1102 the gap G determined in step 1100 is divided by the number N of blades. In the example of figure 13, this means that G = 2196 MB is divided by N = 8 in order to obtain the value of Delta 1 = 275 MB. In step 1104 a threshold is calculated by subtracting Delta 1 from the storage capacity, i.e. threshold = 4096 MB - 275 MB = 3821 MB.

With the threshold calculated in step 1104 the method of figure 5 is performed again in step 1106. The resulting assignment of the objects to the blades is more evenly distributed due to the lowering of the threshold. This is illustrated in figures 15 and 16 for the example of figure 13.

Figure 15 shows the threshold T, which has been calculated in step 1104. With the lowered threshold T the assignment procedure of figure 5 is restarted from the beginning whereby steps 201 and 202 do not need to be performed again, if the sorted object sequence has been stored when the procedure of figure 5 was carried out the first time.

The resulting assignment of database tables to blades after the renewed performance of the procedure of figure 5 with the lowered threshold T is shown in figure 16. As apparent from the comparison of figures 13 and 16 the load is more evenly balanced between the blades after the renewed assignment procedure.

Figure 17 shows an alternative approach for refining the object size balancing. In step 1400 Delta 2 is calculated by calculating the difference of the sum of the storage capacity of the blades and the sum of the object sizes of the objects to be assigned to the blades and by dividing the difference by the number of blades. In step 1402 the threshold is calculated by subtracting Delta 2 from the storage capacity. This threshold is the theoretical limit for the minimum storage capacities required on the individual blades in order to accommodate the objects if it where possible to distribute the objects with finest granularity.

In step 1404 the method of figure 5 is performed again with the threshold as determined in step 1402 whereby the number N is fixed, i.e. for the last blade $B_N$ which is processed the storage capacity will not be sufficient in most cases. In the resulting assignment of objects to blades, it is checked whether for the last blade, which has been processed, there is in fact an excess amount of memory requirement, which exceeds the storage capacity.

If this is not the case, the assignment of objects to blades is outputted in step 1408. If the opposite is the case, the excess amount of memory is divided by the number of blades N which provides Delta 3. In step 1412 the threshold is incremented by Delta 3 and the control goes back to step 1404.

Steps 1404, 1406, 1410 and 1412 are carried out repeatedly until there is no longer an excess amount of memory.

Figure 18 is based on the example of figure 13 and shows the threshold T as calculated in accordance with step 1402 of figure 17. In the example considered here, the difference between the sum of the storage capacities of the blades and the sum of the table sizes is 3 GB. The 3 GB are evenly distributed over the 8 blades, which provides the threshold T.

If there is no excess amount of memory as a result of one iteration but a gap between the aggregated size of objects, which have been assigned to the last blade N, the procedure is continued in order to reduce the gap. This can be done by dividing the gap by the number of blades N and distributing the result over the blades by increasing the threshold correspondingly. The gap is calculated as follows: threshold T - sum of the sizes of the objects assigned to blade N.

In this instance the process is stopped if (i) there is no significant change from one iteration to the next (ii) the iterations toggle between different results, (iii) the standard deviation of the distribution of the objects does not improve or (iv) a maximum number of iterations has been reached.

Figure 19 shows the result of the assignment procedure of figure 5, which has been performed with the threshold T as determined in step 1402. As a result of the assignment procedure there is an excess amount of memory E for blade $B_8$. In the example considered here the excess memory amount E is 858 MB. In accordance with step 1410 the excess amount E is divided by the number of blades N = 8. In accordance with step 1412 the resulting amount of memory Delta 3 = 107 MB is added to the threshold. Next the assignment method of figure 5 is carried out again with the increased threshold, which provides the result as shown in figure 20.

Figure 21 shows a further alternative for refinement of the object size balancing. First the step 1400 of the method of figure 17 is carried out in order to calculate Delta 2. Delta 2 is equivalent to the gap between the theoretical limit, i.e. the threshold as calculated in step 1402 of the method of figure 17, and the storage capacity of a blade.

This gap is scanned by a stepwise variation of the threshold in order to identify an assignment of objects to blades which is balanced. The number of steps, i.e. the number of increments of the threshold, can be predefined or is user-selectable.

In step 1800 Delta 2 is divided by the number of increments, which provides Delta 4. In step 1802 the threshold is calculated by dividing the sum of the object sizes by the number of blades N. With this threshold the assignment method of figure 5 is performed again in step 1804.

In step 1806 a statistical measure is calculated as a quality measure for the assignment of objects to blades obtained as a result of step 1804. For example, the standard deviation of the aggregated sizes of objects assigned to each one of the blades is calculated.

In other words, for each blade the total of the sizes of the objects, which have been assigned to the blade, is calculated. This provides one total size per blade. Next the standard deviation is calculated for the total sizes.

In step 1808 the threshold is incremented by Delta 4 and the control goes back to step 1804. This procedure is continued until the threshold has reached the storage capacity, i.e. the upper limit.

In step 1810 one of the assignments obtained as a result of step 1804 is selected on the basis of the overall statistical measure. For example, the assignment having the lowest standard deviation is selected.

Figure 22 illustrates this method with respect to the example shown in figure 13. The threshold T of 3712 MB is obtained by the calculation of step 1802. From there the threshold is stepwise increased in increments of Delta 4, which is Delta 2 = 384 MB divided my the number of increments. For example, the number of increments is 100. For each assignment procedure the standard deviation of the table sizes assigned to blades is calculated for selection of one of the assignments. Preferably the standard deviations are calculated only for those assignments which fit onto the minimum number of blades.

Figure 23 shows a method for improving the smoothness of an initial distribution of objects over the processing units. In step 50 an ordered sequence of objects is provided. In the example considered here the first element of the ordered sequence requires the largest storage space. The ordered sequence is sorted in descending order of the object sizes.

In step 52 an initial distribution of objects to processing units is provided.

In the following step a loop 54 is performed for all objects of the sequence in the order of the sequence. In step 56 of loop 54 a determination of donor and recipient processing units is made on the basis of the actual distribution of objects to processing units. In the first iteration when the first object in the ordered sequence is considered the actual distribution is the initial distribution provided in step 52.

A donor processing unit is a processing unit which belongs to the first set of processing units, i.e. which has an aggregated size of assigned objects above a threshold level. Those processing units which are not donor processing units are by definition recipient processing units, i.e. processing units belonging to the second set having aggregated object sizes below the threshold. The threshold which is used for differentiating between donor and recipient processing units is the theoretical storage capacity minimum per processing unit that is obtained by calculating the total of the sizes of all objects to be assigned to processing units divided by the number of processing units.

In step 58 of loop 54 an object of a donor processing unit is tentatively assigned to a recipient processing unit that has sufficient remaining storage capacity for the considered object. In step 60 the statistical measure is calculated for the resulting tentative distribution of objects to processing units. The statistical measure is defined such that it indicates a degree of smoothness of the distribution.

In step 62 it is determined whether the tentative distribution has a higher degree of smoothness in comparison to the actual distribution, i.e. the initial distribution for the first iteration of loop 54. If this is the case the tentative reassignment is asserted and the object is reassigned to the recipient processing unit in step 64 which provides a new actual distribution. The new actual distribution forms the basis for the consecutive iteration of loop 54 with respect to the next object in the ordered sequence.

If the smoothness of the tentative distribution is not improved in comparison to the actual distribution the actual distribution is kept the same for the purpose of the consecutive iteration.

After all objects of the ordered sequence have been processed in loop 54 or in case there are no donor or no recipient processing units loop 54 stops.

As a result the final distribution of objects to processing units having an improved smoothness in comparison to the initial distribution is output in step 66. Preferably the procedure shown in Fig. 23 is implemented in the program modules 116 and 118 (cf. Fig. 1).

Fig. 24 to Fig. 36 show an example of the application of the procedure of Fig. 23 on the distribution as shown in figure 13. This distribution is entered as the initial distribution into the method of figure 23 (cf. step 52 of figure 23). Further the ordered sequence of the tables as shown in figure 7 is entered in step 50 of the method of figure 23. On this basis the method of figure 23 is performed in order to improve the smoothness of the initial distribution of figure 13. The corresponding iterations of the redistribution procedure are illustrated in figures 24 to 36:

First a threshold is calculated that serves to differentiate donor and recipient blades. In the preferred embodiment considered here the threshold is the theoretical storage capacity minimum per blade that would be required for a perfectly even distribution of the aggregated object sizes per blade. The further processing is aimed to approximate this ideal situation despite the fact that the object size, e.g. the tables sizes, are finite and vary.

In the preferred embodiment considered here the sum of all table sizes of tables 1 to 20 is 29696MB. Thus the threshold is 29696MB divided by 8, i.e. the number of blades, which yields threshold T = 3712MB. Blades having aggregated table sizes above threshold T are by definition donor blades whereas blades having aggregated table sizes of below threshold T are by definition recipient blades. Taking the initial distribution of tables to blades provided by the method of figure 5 as a starting point blades 1 to 7 are donor blades whereas blade 8 is a recipient blade.

After the donor and recipient blades have been identified the processing of the tables starts in the order of the sorted sequence, starting with the largest table in the ordered sequence. In other words the processing starts with the left most table in the sequence, i.e. table 20, from where it proceeds to the smallest table in the sequence, i.e. table 14 (cf. the ordered sequence as shown in figure 5).

Recipient blade 8 has the storage capacity of 4096MB. Tables 8 and 11 are assigned to blade 8 which have a total size of 1900MB. Thus there is a gap G of remaining storage capacity of recipient blade 8 which can be used for reassigning of a table from one of the donor blades.

By processing the tables in the order of the sequence it is determined that tables 20, 15, 1, 5 and 4 do not fit into gap G of recipient blade 8 and can thus not be reassigned. However table 16 on donor blade 6 has a size of 2150 which fits into gap G = 4096MB - 1900MB = 2196MB. Table 16 is thus tentatively moved from the donor blade 16 to recipient blade 8 as illustrated in figure 25. In order to assess the quality of the resulting tentative distribution statistical measures are used.

In the preferred embodiment considered here the statistical measure is the standard deviation of the aggregated table sizes per blade. The standard deviation S of the initial distribution as shown in figures 11 and 12 is 741,06MB. The standard deviation of the tentative distribution of tables to blades that is obtained when table 16 is moved to recipient blade 8 is S = 856,42MB. Hence moving table 16 to recipient blade 8 increases the standard variance S. This indicates that the smoothness of the distribution of tables to blades deteriorates in the tentative distribution. Therefore this tentative distribution is dropped and no reassignment is made.

From here the control proceeds to processing of the next table in the sequence, i.e. table 10 on donor blade 7. Table 10 fits into gap G and is thus tentatively moved from donor blade 7 to recipient blade 8 as illustrated in figure 26. The standard deviation of the tentative distribution of tables to blades that is thus obtained is S = 673.41 MB which is below the standard deviation of the initial distribution.

As a consequence the tentative distribution of figure 26 is accepted and table 10 is in fact moved from donor blade 7 to recipient blade 8. This move makes blade 8 a donor blade as the total size of the tables that are assigned to blade 8 surpasses threshold T. Likewise the move of table 10 makes blade 7 a recipient blade as the total size of the tables that remain assigned to blade 7 drops below threshold T.

The processing of the tables continues in accordance with the ordered sequence. The next table in the ordered sequence is table 17 that had been assigned to donor blade 5. As table 17 fits into gap G of recipient blade 7 it is tentatively moved there. The standard deviation of the resulting tentative distribution is S = 605,02MB which is below the standard deviation of the actual distribution obtained from the previous move of table 10 to blade 8. Thus the tentative distribution is accepted and table 17 is moved to recipient blade 7 as shown in figure 27.

The next table in the sequence is table 9 which had been assigned to blade 6. In the actual distribution of tables to blades which is obtained from the previous iteration blade 5 is a recipient blade whereas all the other blades are donor blades. Table 9 fits into gap G of recipient blade 5 as illustrated in figure 28. Table 9 but thus tentatively moved to blade 5 but this results in an increase of the standard deviation from 605,02MB to 673,61 MB. Hence the distribution is not changed in this iteration and the processing continues with the next smallest table in the sequence, i.e. table 18.

Table 18 does in fact fit into gap G and is thus tentatively moved from donor blade 7 to recipient blade 5. The resulting standard deviation S is 539,09MB which is below the actual standard deviation of 605,02MB obtained from the previous iteration. Thus the tentative distribution of figure 29 is accepted and table 18 is reassigned to blade 5.

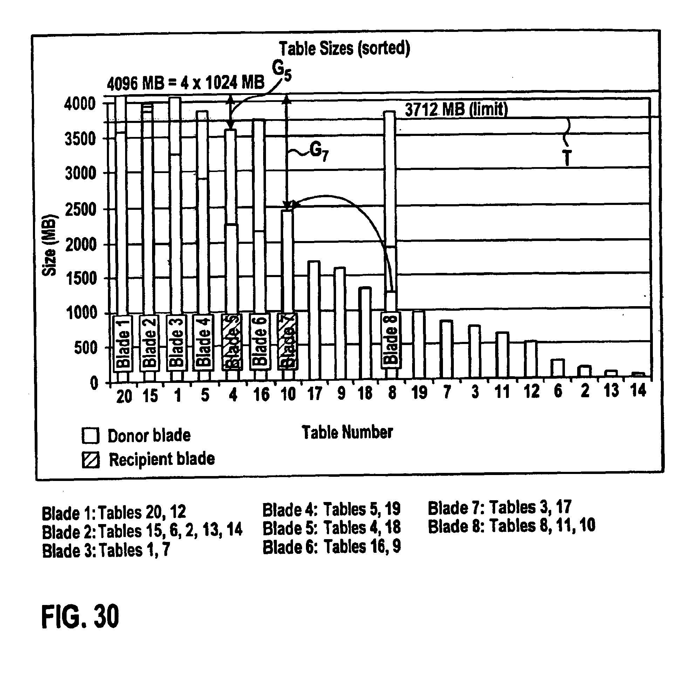

The next table in the sequence is table 8 that had been assigned to blade 8. In the actual distribution obtained from the previous iteration blades 5 and 7 are recipient blades whereas all other blades are donor blades. Table 8 is on donor blade 8 and does not fit into gap $G_5$ of recipient blade 5. However table 8 does fit into gap $G_7$ of recipient blade 7 and is thus tentatively moved to recipient blade 7. In the resulting tentative distribution the new standard deviation is 479,49MB which is below the actual standard deviation of S = 539,09MB. The tentative distribution of figure 30 is thus accepted and table 18 is in fact moved from donor blade to recipient blade 7.

The next table in the sequence is table 19. In the actual distribution obtained from the previous iteration blades 5, 7 and 8 are recipient blades while all other blades are donor blades. Table 19 is on a donor blade. Gaps $G_5$ and $G_7$ of recipient blades 5 and 7 are too small to accommodate table 19. Table 19 is thus moved to recipient blade 8 which has a sufficiently large gap $G_8$ to accommodate table 19. The standard deviation for the resulting tentative distribution is 390,36MB which is below the actual standard deviation obtained from the previous iteration. The tentative distribution of figure 31 is thus accepted and table 19 is in fact moved from donor blade 4 to recipient blade 8 (Figure 32).

The next table in the ordered sequence is table 7 on blade 3. Blades 4, 5, 7 and 8 are recipient blades in the actual distribution. Table 7 is tentatively moved from donor blade 3 to recipient blade 4 as table 7 is too large to fit on the other recipient blades. The resulting standard deviation of the new tentative distribution is 263,26MB which is below the actual standard deviation obtained from the previous iteration. Table 7 is therefore reassigned from donor blade to recipient blade 4.

The resulting actual distribution is shown in figure 33. In this distribution blades 3, 5, 7 and 8 are recipient blades. The next table in the sequence is table 3 which is assigned to recipient blade 7. Table 3 is skipped therefore. The same applies for table 11 because it is assigned to recipient blade 8 and can thus not be moved to a donor blade by definition.

The next table in the ordered sequence that is assigned to a donor blade is table 12 on blade 1. Table 12 fits into gaps $G_3$ and $G_5$ of recipient blades 3 and 5, respectively and is thus tentatively moved both to recipient blade 3 and recipient blade 5. This results in two competing tentative distributions. When table 12 is tentatively moved to table 3 the resulting new standard deviation of the corresponding tentative distribution is 149,53MB. In contrast, when table 12 is moved to recipient blade 5 the resulting new standard deviation of the corresponding tentative distribution is 264,39MB. Thus the tentative distribution which is obtained when table 12 is moved to blade 3 is smoother than the alternative tentative distribution obtained by tentatively moving table 12 to blade 5. Hence the tentative distribution obtained by moving table 12 to recipient blade 3 is accepted. The resulting new distribution is shown in figure 34.

In the new distribution blades 1, 5, 7 and 8 are recipient blades. The next table in the ordered sequence is table 6 which is assigned to donor blade 2. Table 6 is small enough to fit into gaps $G_1$, $G_5$, $G_7$, and $G_8$ of the respective recipient blades 1, 5, 7 and 8. This results in four competing tentative distributions (Figure 35):

| Tentative Distribution | New Standard Deviation |
|---|---|
| Table 6 to blade 1 | 87,66MB |
| Table 6 to blade 5 | 89,21 MB |
| Table 6 to blade 7 | 129,89MB |
| Table 6 to blade 8 | 96,59MB |

Hence the tentative distribution obtained by moving table 6 to recipient blade 1 yields the smallest new standard deviation and is thus accepted.

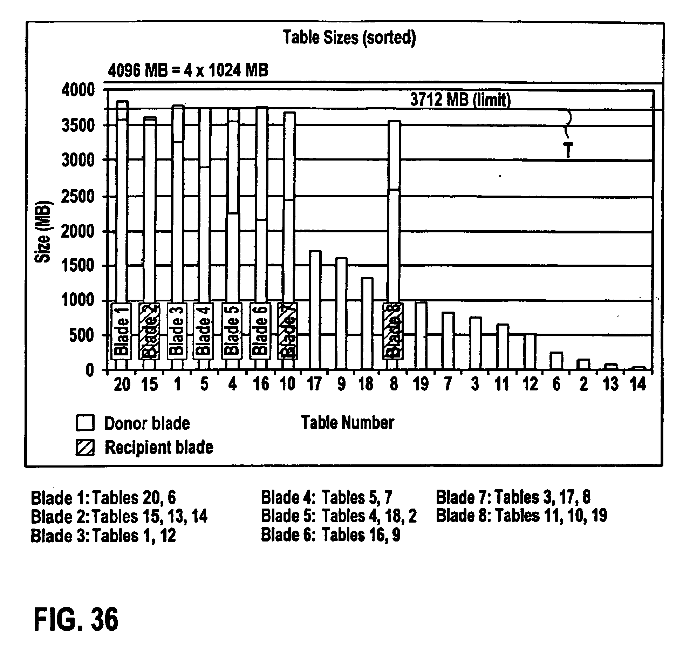

Figure 35 illustrates the resulting distribution. In this distribution blades 5, 7 and 8 are recipient blades. The next table in the ordered sequence is table 2 on donor blade 2. The competing tentative distributions obtained from the actual distribution of figure 36 are evaluated as follows:

| Tentative Distribution | New Standard Deviation |
|---|---|
| Table 2 to blade 5 | 71,50MB |
| Table 2 to blade 7 | 103,36MB |
| Table 2 to blade 8 | 77,26MB |

The largest reduction of the standard deviation is thus obtained by moving table 2 to recipient blade 5. The corresponding tentative distribution is thus accepted; the resulting actual distribution is shown in figure 36.

In the distribution of figure 365 blades 2, 7 and 8 are recipient blades. The remaining tables in the ordered sequence, i.e. tables 13 and 14, are assigned to recipient blade 2 and can thus by definition not be reassigned. Hence the distribution as shown in figure 36 is the final distribution obtained from the initial distribution of figure 13. It is to be noted that the smoothness of the final distribution is improved drastically as it is also indicated by the drop of the standard deviation from 741,06MB to 71,50MB.

Figure 37 shows a more detailed embodiment of the corresponding redistribution method.

In step 300 an initial distribution of tables to blades is provided. For example this can be done by means of the method of figure 5. Alternatively any other distribution can be used as a starting point, e.g. a real life distribution of an existing blade computing system. It is to be noted that it is not essential for the present invention that the initial distribution has the minimum number of blades (as it can be provided by the method of fig. 5).

In step 302 the set of donor blades in the initial distribution is determined. Preferably this is done by means of a threshold level. For example the threshold level is obtained by calculating the total of all table sizes and dividing the total of all table sizes by the total number of blades. Those blades that have tables having an aggregated size surpassing the threshold are by definition donor blades. The number of donor blades in the initial distribution is denoted D.

Likewise the set of recipient blades in the initial distribution is determined. By definition a blade that is not a donor blade is a recipient blade. The number of recipient blades is denoted R.

In step 306 the largest table K in the initial distribution is identified. Further the standard deviation S of the aggregated table sizes in the initial distribution is calculated in step 306.

In step 308 the number N of the current table is initialised to K.

In step 310 a determination is made whether D > = 1 and R > = 1. If this is not the case there is either no recipient or no donor blade such that none of the tables can be reassigned. In this instance the initial distribution cannot be further improved.

If it is determined in step 310 that there is in fact at least one donor blade and at least one recipient blade the control goes to step 312. In step 312 a determination is made whether table N is on a donor blade. If this is not the case the control goes to step 348. In step 348 the next smallest table K after table N is searched. In step 350 it is decided if such a smaller table K has been found. If this is not the case the control stops in step 352. If the contrary is the case the control goes back to step 308.

If it has been determined in step 312 that table N is in fact on a donor blade the process goes on to step 314 where one of the recipient blades in the set of recipient blades is arbitrarily chosen as the current recipient r in order to investigate a corresponding tentative reassignment of table N.

In step 316 a determination is made whether table N fits on recipient r. If this is the case the standard deviation s(r) of the resulting tentative distribution obtained by moving table N from its current blade C to blade r is calculated. In step 320 it is determined whether the standard deviation s(r) is below the standard deviation S of the actual distribution.

If this is the case blade r becomes a candidate blade as a target for reassigning table N. Blade r and the corresponding standard deviation s(r) are stored in array A in step 322. It is to be noted that instead of array A another suitable data structure can be used for storage of tuples r, s(r), such as a linear pointer list, a file, or another data structure. From there the control goes to step 324 where a determination is made whether further recipient blades exist in the actual distribution that need to be processed. If this is the case the control goes to step 326 where r is set to the number of the next recipient blade in the set of recipient blades that has not been processed so far. From step 326 the control goes back to step 316.

If it turned out in step 316 that table N does not fit on recipient r or if it turned out in step 320 that s(r) is not below S the control goes directly from step 316 to step 320 to step 324.

After all recipients in the set of recipient blades have been processed the control goes to step 328. In case there is no pair r, s(r) in the array R the control goes directly from step 328 to step 348 in order to initiate the consecutive iteration, if any.

If there is at least one entry in array A the control goes from step 328 to step 330. In step 330 the entry of array A having the smallest s(r) is identified. In consecutive step 332 the target recipient blade T for moving of table N is set to r. In step 334 table N is moved from donor blade C to recipient blade T and S is set to s(T).

In step 336 a determination is made whether blade C has become a recipient blade due to the move. If this is the case the numbers D and R are adapted correspondingly in step 338. Blade C is removed from the set of donor blades and added to the set of recipient blades in step 340 from where the control goes to step 342. In case blade C has not become a recipient blade the control goes directly from step 336 to step 342.

In step 342 it is determined whether blade T has become a donor blade. If this is the case the numbers D and R are adapted correspondingly in step 344 and blade C is removed from the set of recipient blades and added to the set of donor blades in step 346. From there the control goes to step 348. In case it is determined in step 342 that blade T has not become a donor blade, the control goes directly from step 342 to step 348.

The loop consisting of steps 308 to step 350 is carried out until all tables have been processed in descending order. The final distribution which is thus obtained is output in step 352.

Figure 38 shows a two-dimensional procedure for assigning the objects to blades and to thereby determine the minimum value for N. This procedure can be implemented by the program module 122 (cf. Fig. 1). This procedure is analogous to the one-dimensional procedure of figure 5; like steps in the procedures of figures 38 and 5 are designated by the same step numbers.

In step 200 an sorting index is calculated for each one of the M objects. An sorting index of an object is indicative of the amount of blade resources the object requires. The sorting index serves to sort the objects in decreasing order of blade resource requirements.

For example the sorting index is calculated on the basis of the sum of the normalised object load and normalised object size plus the absolute value of the difference of the normalised load and size or a linear combination thereof.

In step 201 a sorting operation is performed in order to sort the M objects by sorting index. The corresponding object sequence is provided in step 202. In step 204 the index i for the blades is initialised to 1.

In step 206 processing of the object sequence starts with the first object of the sequence, i.e. the object having the largest sorting index value. The first object of the sequence is assigned to a first one of the blades, i.e. blade B1, in step 206. In step 208 the first object that has been assigned to blade B1 is deleted from the sequence.

In step 210 the sizes of the objects that have already been assigned to blade B1 are summed up in order to provide an aggregated object size of blades B1. Next the size of a gap $G_S$ between the aggregated object size of blade B1 and a size threshold $T_S$ is calculated. When the assignment procedure of figure 38 is carried out the first time, the size threshold $T_S$ is the storage capacity of one of the blades.

In step 211 the loads of the objects that have already been assigned to blade B1 are summed up in order to provide an aggregated load of blade B1. Next a gap $G_L$ between the aggregated object loads of blade B1 and a load threshold $T_L$ is calculated. When the assignment procedure of figure 38 is carried out the first time, the load threshold $T_L$ is the load capacity of one of the blades.

In step 212 it is determined whether there is a next object in the ordered sequence that fits into both gaps $G_S$ and $G_L$. In other words, a consecutive object following the first object in the object sequence that has an object size small enough to fit into gap $G_S$ and at the same time has an object load that is small enough to fit into $G_L$ is searched.

The next consecutive object in the sequence that fulfils this condition is assigned to blade B1 in step 214 and deleted from the sequence in step 216 before the control goes back to step 210.

If there is no such object that fulfils the condition of step 212, step 218 is carried out. In step 218 it is determined whether all objects have already been assigned to blades. In other words, in step 218 it is checked whether the sequence is empty. If this is not the case the index i is incremented in step 220 and the control goes back to step 206 in order to assign remaining objects of the sequence to the next blade B2.

If the contrary is the case the index i is the minimum number N of blades that are required to handle the M objects, i.e. i =N. This number is output in step 220. The minimum number N of blades that are required to handle the M objects can be a basis for an investment decision for purchasing of a corresponding number of blades. The assignment of objects to blades is output in step 224 in order to visualise the quality of the object size balancing.

Figure 39 shows the normalised table sizes of the tables of figure 6. The normalised size of a table is obtained by dividing the table size by the maximum storage capacity of one of the blades.

Figure 40 shows the loads of the tables. In the preferred embodiment considered here the mean number of access operations (selects) per second that are performed or expected to be performed with respect to a table is used as a load indicator. In the example considered here the load as expressed by the number of read accesses per second to a table varies between five read accesses per second (table 6) and 950 read accesses per second (table 8). The table loads given in figure 40 can be actual table loads or average table loads that have been obtained by monitoring a real-life data processing system. Alternatively the table loads are estimates or simulation results for the purpose of planning cluster 100.

Figure 41 shows the normalised table loads. The normalised table load of a given table is obtained by dividing the number of read accesses per second of that table by the load capacity of one of the blades.

In the preferred embodiment considered here the storage capacity of a blade is 4,096MB. Hence a normalised table size of one indicates that the table has the absolute maximum size that can be handled by a given blade hardware.

The load capacity of a blade is the maximum possible access load that can be handled by a core engine running on one of the blades in the example considered here. This maximum value can be determined by benchmarks, by experiment or simulation. The load capacity depends on various parameters such as hardware and software characteristics and network bandwidth if a network is used to perform the table accesses. In the preferred embodiment considered here, the load capacity of one of the blades is 1,000 read accesses per second. For the purpose of explanation only read accesses are considered here. However, other typical data processing tasks, such as accesses that involve changes to the data, can also be taken into consideration for determining load-capacity and table loads.

Figure 42 shows a diagram illustrating the various normalised table sizes and table loads. As apparent from figure 42 there are tables that require only a minimum amount of blade resources, especially table 13, that has a small table size and a low table load. On the other hand there are tables that require a large amount of blade resources as they have both large table size and high table load. The distribution of tables to blades aims to balance the usage of the respective blade resources with respect to both size and load. The two constraints, i.e. size and load, are combined into a common sorting index that provides an objective measure for the amount of blade resources a given table requires.

The following definition of the sorting index is used for the purposes of explanation only and without restriction of generality:

$$\text{Sorting index} = W1 *(\text{size} + \text{load}) + W2 *\text{absolute value (size} - \text{load}),$$

where size is the table size,
load is the table load
1 is a weighting factor for (size + load) and
W2 is a weighting factor for the absolute value of the difference of size and load.

For the purposes of the following example the weighting factors 1 and W2 are set to one without restriction of generality.

In this case the above expression evaluates as follows:
If size > load: sorting index = 2 * size
If size = load: sorting index = 2 * size = 2 * load
If size < load: sorting index = 2 * load.

Figure 43 shows a sorted sequence in descending order of the sorting indices of the tables. The table that has the largest sorting index value and thus requires the largest amount of blade resources is table 8, whereas the table having the smallest sorting index value and which does require the lowest amount of blade resources is table 13 as apparent from figure 43.

Figure 44 shows the sorted sequence of figure 43 illustrating the normalised table sizes and table loads of the individual tables.

Figure 45 illustrates the first iteration for assigning tables to blades based on the ordered sequence as shown in figure 43 and 44. It is assumed that each one of the blades has a storage capacity that corresponds to a normalised size threshold $T_S = 1$ and a load capacity that corresponds to a normalised load threshold $T_L$.

The assignment procedure starts with the first table of the sorted sequence, i.e. table 8. Table 8 is assigned to blade 1 as illustrated in figure 45. This results in a normalised gap $G_S$ of unused storage capacity $G_S = 0,6948$ and a gap $G_L$ of unused load capacity $G_L = 0,05$.

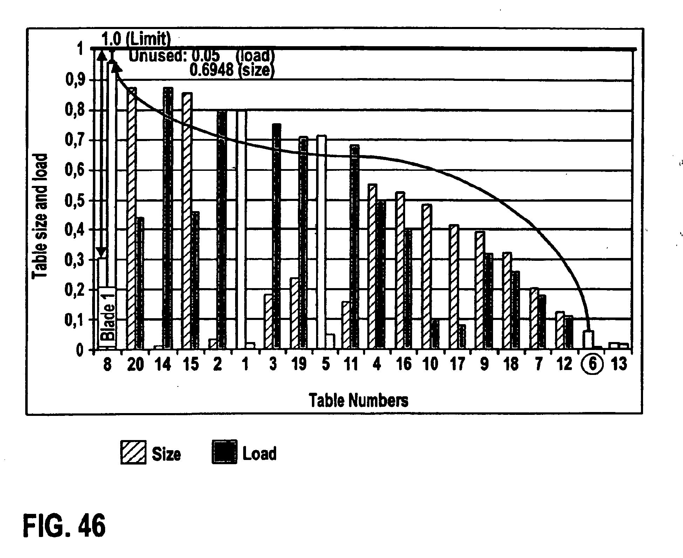

Next consecutive tables in the ordered sequence are searched that have table sizes and table loads that fit into the respective gaps $G_S$ and $G_L$. These are tables 6 and 13. As table 6 precedes table 13 in the ordered sequence, it is assigned to blade 1 as illustrated in figure 46.

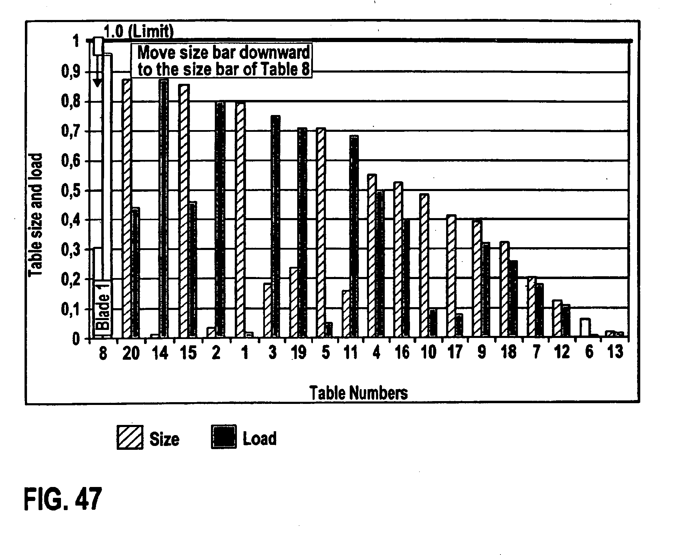

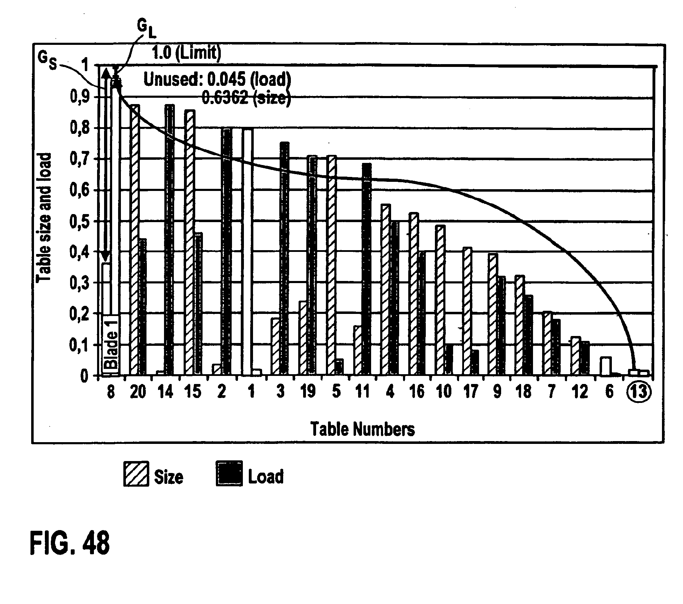

Next the aggregated table size and the aggregated table load of blade 1 is updated as illustrated in figure 47. This results in a updated normalised gap $G_S = 0,6362$ and an updated normalised gap $G_L = 0,045$ as illustrated in Fig. 48. Now tables of the ordered sequence that are consecutive to table 8 that fit into both gaps $G_S$ and $G_L$ are searched.

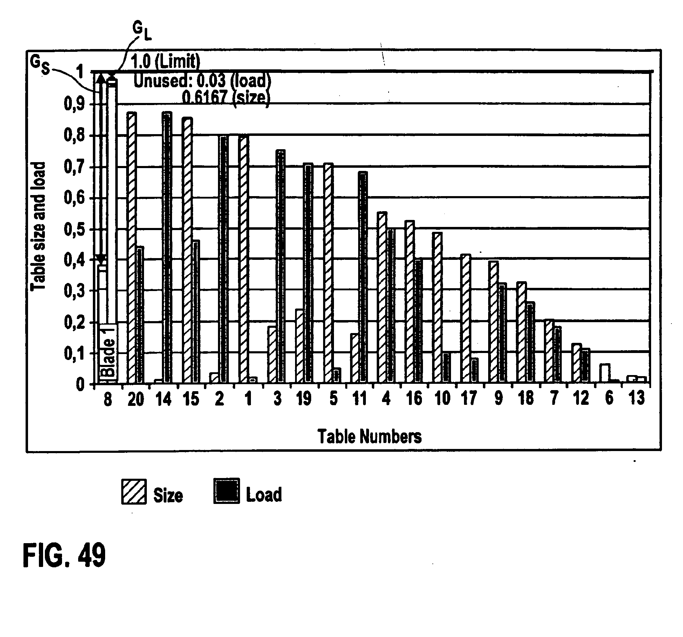

The only table that fulfils both conditions is table 13 which is thus assigned to blade 1 as illustrated in figure 48. The result is shown in figure 49. The updated normalised gap $G_S$ is 0,6167 and the updated normalised gap $G_L$ is 0,03. No table within the ordered sequence satisfies both constraints.

As there remain unassigned tables in the sequence an additional blade 2 is required as illustrated in figure 50.

By definition the first table of the remaining ordered sequence, i.e. table 20 is assigned to blade 2. This results in normalised gaps $G_S = 0,1294$ and $G_L = 0,5600$. The only table that satisfies both constraints is table 12 which is thus moved onto blade 2 as illustrated in figure 50.

Figure 51 illustrates the result of this assignment. The updated normalised gap $G_S$ is 0,0024 and the updated normalised gap $G_L$ is 0,4500. None of the tables of the remaining ordered sequence satisfies these constraints such that an additional blade 3 is required etc. This procedure is carried out until the ordered sequence is empty, i.e. after all tables have been assigned to one blade. The resulting assignment of blades and the resulting minimum number of blades is illustrated in figure 52. In the example considered here the minimum number N of blades that is required for handling of all of the tables is N = 10.

In order to further improve the quality of the balancing the method of figure 53 can be carried out on the basis of the result provided by the method of figure 38. In step 800 the largest remaining gaps, $G_S$ and $G_L$ are determined as illustrated in figure 52. In the example considered in figure 52 the largest remaining gap $G_S$ is on blade 1 and the largest remaining gap $G_L$ is on blade 10.

In step 802 the largest remaining gap $G_S$ is divided by N which yields delta 1 and the largest remaining gap $G_L$ is divided by N which yields delta 2.

In step 804 the size threshold $T_S$ is reduced by delta 1 and the load threshold $T_L$ is reduced by delta 2. In step 806 the method of figure 38 is performed again with the reduced thresholds as determined in step 804. In case the sorting indices and the original object sequence obtained from the method of figure 38 by performing steps 200 to 202 have been saved, these steps can be skipped in order to start processing of the method of figure 38 in step 204. The result is a further improved balancing.

Figure 54 shows an alternative approach for refining the balancing. In step 900 delta 3 is calculated by calculating the difference of the sum of the storage capacity of the blades and the sum of the object sizes of all objects to be assigned to the blades and by dividing the difference by the minimum number of blades N. In step 902 delta 4 is calculated by calculating the difference of the sum of the load capacities of the blades and the sum of the object loads of all objects to be assigned to the blades and by dividing the difference by the minimum number of blades N.. In the example considered here no normalized values are used in steps 900 and 902.

In step 904 the size threshold $T_S$ is reduced by the normalised value of delta 3. The normalised value of delta 3 is obtained by dividing delta 3 by the storage capacity of one of the blades.

Likewise the load threshold $T_L$ is updated in step 906 by the normalised delta 4. Normalisation of delta 4 is performed by dividing delta 4 by the load capacity of one of the blades.

The reduced size threshold $T_S$ and the reduced load threshold $T_L$ correspond to the theoretical limit of blade resources that are required for handling of the given objects. As the object granularity is finite the theoretical threshold limits will be surpassed in most cases:

In order to refine the balancing the method of figure 38 is performed again (step 908) on the basis of the size threshold $T_S$ obtained from step 904 and the reduced load threshold $T_L$ obtained from step 906 with the modification that the number of blades for the renewed performance of the method of figure 38 is limited by the minimum number of blades N that has been determined previously. In other words, the assignment procedure of figure 38 stops when the minimum number N of blades has been used up; this may have the consequence that there will be an excess amount of memory and/or load requirement for the last blade of the minimum number N of blades considered for the assignment procedure that surpasses the respective thresholds $T_S$ and/or $T_L$. Again steps 200 to 202 of the method of figure 38 can be skipped in case the sorting indices and the sorted sequence has been stored when the method of figure 38 was performed the first time. In step 910 it is determined whether there is such an excess amount of memory requirement and/or load requirement for the last blade N, i.e. blade 10. If this is not the case the resulting assignment of objects to blades is output in step 912.

If the contrary is the case step 914 is carried out in order to calculate the values of delta 5 and/or delta 6. Delta 5 is obtained by dividing the excess amount of memory, if any, by the number of blades N. Likewise delta 6 is obtained by dividing the excess load requirement, if any, by the number of blades N.

On this basis the size and/load thresholds are incremented in step 916. From there the control goes back to step 908.

Steps 908 to 916 are carried out repeatedly until there is no longer an excess amount of memory and/or load requirement that cannot be provided by the given number N of blades.

Figure 55 shows a further alternative for refinement of the balancing. First steps 900 and 902 of the method of figure 54 are carried out in order to obtain delta 3 and delta 4. The gaps delta3 and delta4 are now scanned by stepwise variation of the respective size and load thresholds in order to identify a more balanced assignment of objects to blades. For this purpose delta 3 and delta 4 are divided into equidistant intervals having step sizes delta 7 and delta 8, respectively, as shown in step 1000. The number of increments for performing the respective scans can be predefined or is user selectable.

It is to be noted that the number of increments for scanning $G_S$ and for scanning $G_L$ does not need to be the same. Preferably the scans are performed independently from each other such that the total number of assignments that is considered is the number of increments for the $G_S$ scan multiplied by the number of increments for the $G_L$ scan.

In step 1002 the size and load thresholds are set to the respective theoretical minima that are required to provide sufficient blade resources for handling of the given number of objects. On this basis the method of figure 38 is performed again in step 1004. In step 1006 a statistical measure is calculated as a quality measure for the balancing of the assignment of objects to blades obtained as a result of step 1006, if any. For example, the standard deviation of the aggregated sorting index values of objects assigned to each one of the blades is calculated. In other words, for each blade the total of the sorting index values of the objects that have been assigned to the blade is calculated. This provides one total sorting index value per blade. Next the standard deviation is calculated for the total sorting index values.

In step 1008 at least one of the thresholds $T_S$ or $T_L$ is incremented by the normalised value of delta 7 or the normalised value of delta 8, respectively. Next step 1004 is carried out again on the basis of the incremented size and load thresholds. Steps 1004 to 1008 are carried out repeatedly until the respective scans through $G_S$ and $G_L$ have been completed and the corresponding assignments of objects to blades have been obtained. In step 1010 one of the assignments is selected based on the statistical measures. For example, the assignment having the lowest standard deviation is selected.

It is to be noted that this procedure is limited by the minimum number of blades N. For assignments that do not fit on this given minimum number of blades N no statistical measure needs to be calculated as these assignments are not considered

It is to be noted that the program modules 116 and 118 in the embodiment of figure 1 can be implemented by a single software routine that implements e.g. the procedure as shown in figure 5, 14, 17, and/or figure 21 as this procedure can be used both for the purpose of size balancing and load balancing. In the load balancing case the data objects need to be sorted by load rather than by size but otherwise these procedures can be used in the same way.

**List of Reference Numerals**

| | |
|---|---|
| 100 | Cluster |
| 102 | Processor |
| 104 | Memory |
| 106 | Network |
| 108 | Management unit |
| 110 | Processor |
| 112 | Program Module |
| 114 | Program Module |
| 116 | Program Module |
| 118 | Program Module |
| 120 | Program Module |
| 122 | Program Module |
| 124 | Program Module |
| 126 | Main memory |
| 128 | Storage |
| 130 | Table |
| 132 | Clock |
| 134 | Monitor |
| 136 | Window |
| 138 | Radio-button |
| 140 | Radio-button |
| 142 | Radio-button |
| 144 | Check Box |
| 146 | Check Box |
| 148 | Entry Field |
| 150 | Window |
| 152 | Diagram |
| 154 | Bar |
| 156 | Button |
| 158 | Button |
| 160 | Button |

**Claims**

1.   A data processing system for determining a distribution of a set of objects, said objects having a first and a second property, to processing units of a cluster (100) of processing units, all processing units having a memory (104) and a processor (102), all memories having the same storage capacities for accommodating objects, and all processors having the same load capacities, the data processing system comprising:

- means (114, 130) for selection of a first or a second mode of operation,
- means (116, 118, 120, 122) for determining a distribution of the set of objects over a set of the processing units,
- means (116, 118, 120, 122) for determining a minimum number of the processing units that have sufficient capacities to accommodate the set of objects, the means for determining a minimum number being operable to

a) performing a sorting operation in order to sort the objects based on said first and/or said second property in decreasing order for providing an object sequence (201; 200, 201),
b) initializing an index i for the processing units (204),
processing of the first object sequence starting with the first object of the object sequence by
c) assigning the first object to the processing unit i (206),
d) deleting the first object from the object sequence (208),
e) adding up the first and/or second properties of the objects which have already been assigned to processing unit i to provide first and/or second aggregated properties,
f) calculating first and/or second gaps between the first and/or second aggregated properties and the storage capacity and/or load capacity, respectively (210; 210, 211),
g) determining whether there remains an object in the object sequence which fits into the first and/or second gaps (212), and if this is the case, assigning (214) that object to the processing unit i having the largest first and/or second properties, deleting (216) this object from the object sequence, and going back to step f), and if there is no such object which fits into the first and/or second gaps, determining (218) whether the object sequence is empty, wherein the index i is incremented (220) by 1 when the object sequence is not empty and going back to step c), and wherein the index i equals the minimum number when the object sequence is empty (222),

wherein in the first mode of operation the set of the processing units contains all processing units of the cluster, and in the second mode of operation the set of the processing units contains the minimum number of the processing units, further comprising means (114, 130) for selection of first and second distribution modes, wherein in the first distribution mode a single property of the objects is used for determining the distribution and wherein in the second distribution mode first and second properties of the objects are used for determining the distribution,
wherein the single property is the size of an object or the load of an object, ,
wherein the first property is the size of an object and the second property is the load of an object.
wherein in the first distribution mode the single property is used for determining the minimum number of the processing units, and wherein in the second distribution mode the first and second properties are used for determining the minimum number of the processing units, if the second mode of operation is selected.

2.   The data processing system of claim 1, further comprising means (130, 132) for automatically initiating a re-distribution of the set of objects in order to re-assign objects of the set of objects to processing units of the cluster in accordance with a distribution provided by the means for determining a distribution.

3.   The data processing system of any one of the preceding claims, further comprising means (114; 150, 156, 158, 160) for manually initiating a re-distribution of the set of objects in order to re-assign objects of the set of objects to processing units of the cluster in accordance with a distribution provided by the means for determining a distribution .

4.   The data processing system of any one of the preceding claims, further comprising means (150, 152) for visualising a current distribution and a re-distribution provided by the means for determining a distribution and means (156) for entering a user's acceptance of the re-distribution.

5.   A method of determining a distribution of a set of objects, said objects having a first and a second property, to processing units of a cluster of processing units, all processing units having a memory (104) and a processor (102), all memories having the same storage capacities for accommodating objects, and all processors having the same load capacities, the method comprising:

- selection of a first or a second mode of operation,
- determining a distribution of the set of objects over a set of the processing units,
- determining a minimum number of the processing units that have sufficient capacities to accommodate the set of objects by the steps of

a) performing a sorting operation in order to sort the objects based on said first and/or said second property in decreasing order for providing an object sequence (201; 200, 201),

b) initializing an index i for the processing units (204),

processing of the first object sequence starting with the first object of the object sequence by

c) assigning the first object to the processing unit i (206),

d) deleting the first object from the object sequence (208),

e) adding up the first and/or second properties of the objects which have already been assigned to processing unit i to provide first and/or second aggregated properties,

f) calculating first and/or second gaps between the first and/or second aggregated properties and the storage capacity and/or load capacity, respectively (210;210,211),

g) determining whether there remains an object in the object sequence which fits into the first and/or second gaps (212), and if this is the case, assigning (214) that object to the processing unit i having the largest first and/or second properties, deleting (216) this object from the object sequence, and going back to step f), and if there is no such object which fits into the first and/or second gaps, determining (218) whether the object sequence is empty, wherein the index i is incremented (220) by 1 when the object sequence is not empty and going back to step c), and wherein the index i equals the minimum number when the object sequence is empty (222),

wherein in the first mode of operation the set of the processing units contains all processing units of the cluster, and in the second mode of operation the set of the processing units contains the minimum number of the processing units, further comprising selection of a first or a second distribution mode, wherein in the first distribution mode a single property of the objects is used for determining the distribution and wherein in the second distribution mode first and second properties of the objects are used for determining the distribution,

wherein the single property is the size of an object or the load of an object,

wherein the first property is the size of an object and the second property is the load of an object,

wherein in the first distribution mode the single property is used for determining the minimum number of the processing units, and wherein in the second distribution mode the first and second properties are used for determining the minimum number of the processing units, if the second mode of operation is selected.

6. The method of claim 5, further comprising automatically initiating a re-distribution of the set of objects in order to re-assign objects of the set of objects to processing units of the cluster in accordance with a distribution provided by the means for determining a distribution.

7. The method of claim 5 or 6, further comprising manually initiating a re-distribution of the set of objects in order to re-assign objects of the set of objects to processing units of the cluster in accordance with a distribution provided by the means for determining a distribution.

8. The method of any one of the preceding claims 5 to 7 further comprising visualising a current distribution and a re-distribution provided by the means for determining a distribution and means (156) for entering a user's acceptance of the re-distribution.

9. A computer program product comprising computer executable instructions for performing a method of any one of the preceding claims 5 to 8.

**Patentansprüche**

1. Datenverarbeitungssystem zur Bestimmung einer Verteilung eines Satzes von Objekten zu Verarbeitungseinheiten eines Clusters (100) von Verarbeitungseinheiten, wobei die Objekte eine erste und eine zweite Eigenschaft aufweisen, wobei alle Verarbeitungseinheiten einen Speicher (104) und einen Prozessor (102) aufweisen, wobei alle Speicher dieselbe Speicherkapazität zur Aufnahme der Objekte aufweisen und wobei alle Prozessoren dieselben Lastkapazitäten aufweisen, wobei das Datenverarbeitungssystem umfasst:

- Mittel (114, 130) zur Auswahl eines ersten oder eines zweiten Betriebsmodus,
- Mittel (116, 118, 120, 122) zur Bestimmung einer Verteilung des Satzes von Objekten über einen Satz der Verarbeitungseinheiten,
- Mittel (116, 118, 120, 122) zur Bestimmung einer minimalen Anzahl der Verarbeitungseinheiten, welche ausreichende Kapazitäten zur Aufnahme des Satzes von Objekten aufweisen, wobei die Mittel zur Bestimmung einer minimalen Anzahl betreibbar sind zur

a) Durchführung eines Sortiervorgangs, um die Objekte basierend auf den besagten ersten und/oder zweiten Eigenschaften gemäß abnehmender Reihenfolge zu sortieren, um eine Objektsequenz (201; 200, 201) zur Verfügung zu stellen,
b) Initialisierung eines Index i für die Verarbeitungseinheiten (204),

- Verarbeitung der ersten Objektsequenz beginnend mit dem ersten Objekt der Objektsequenz durch

c) Zuordnung des ersten Objekts zu der Verarbeitungseinheit i (206),
d) Löschen des ersten Objekts aus der Objektsequenz (208),
e) Addieren der ersten und/oder zweiten Eigenschaften der Objekte, welche bereits zur Verarbeitungseinheit i zugeordnet wurden, um erste und/oder zweite Gesamteigenschaften zur Verfügung zu stellen,
f) Berechnung erster und/oder zweiter Lücken zwischen den ersten und/oder zweiten Gesamteigenschaften und der entsprechenden (210; 210, 211) Speicherkapazität und/oder Lastkapazität,
g) Bestimmung, ob ein Objekt der Objektsequenz übrigbleibt, welches in die erste und/oder zweite Lücke (212) passt, und wenn dies der Fall ist, Zuordnung (214) dieses Objekts zu der Verarbeitungseinheit i, welche die größten ersten und/oder zweiten Eigenschaften aufweist, Löschen (216) dieses Objekts aus der Objektsequenz und Zurückgehen zu Schritt f), und im Falle dessen, dass es kein solches Objekt gibt, welches in die erste und/oder zweite Lücke passt, Bestimmung (218), ob die Objektsequenz leer ist, wobei der index i um 1 erhöht wird (220), wenn die Objektsequenz nicht leer ist und zurückgehen zu Schritt c), und wobei der index i der minimalen Anzahl entspricht, wenn die Objektsequenz leer ist (222),

wobei der erste Betriebsmodus des Satzes von Verarbeitungseinheiten alle Verarbeitungseinheiten des Clusters enthält und wobei in dem zweiten Betriebsmodus der Satz von Verarbeitungseinheiten die minimale Anzahl der Verarbeitungseinheiten enthält,
- des Weiteren umfassend Mittel (114, 130) zur Auswahl eines ersten und zweiten Verteilungsmodus, wobei in dem ersten Verteilungsmodus eine einzelne Eigenschaft der Objekte dazu verwendet wird, um die Verteilung zu bestimmen und wobei in dem zweiten Verteilungsmodus erste und zweite Eigenschaften der Objekte dazu verwendet werden, um die Verteilung zu bestimmen,
- wobei die einzelne Eigenschaft die Größe eines Objekts oder die Last eines Objekts ist,
- wobei die erste Eigenschaft die Größe eines Objekts ist und die zweite Eigenschaft die Last eines Objekts ist,
- wobei im ersten Verteilungsmodus die einzelne Eigenschaft dazu verwendet wird, um die minimale Anzahl der Verarbeitungseinheiten zu bestimmen und wobei in dem zweiten Verteilungsmodus die ersten und zweiten Eigenschaften dazu verwendet werden, um die minimale Anzahl von Verarbeitungseinheiten zu bestimmen, wenn der zweite Betriebsmodus ausgewählt ist.

2. Datenverarbeitungssystem nach Anspruch 1, des Weiteren umfassend Mittel (130, 132) zur automatischen Initiierung einer erneuten Verteilung des Satzes von Objekten, um erneut Objekte des Satzes von Objekten Verarbeitungseinheiten des Clusters in Übereinstimmung mit einer Verteilung zuzuordnen, welche durch die Mittel zur Bestimmung einer Verteilung zur Verfügung gestellt werden.

3. Datenverarbeitungssystem nach einem der vorhergehenden Ansprüche, des Weiteren umfassend Mittel (114; 150, 156, 158, 160) zur manuellen Initiierung einer erneuten Verteilung des Satzes von Objekten, um Objekte des Satzes von Objekten erneut zu Verarbeitungseinheiten des Clusters in Übereinstimmung mit einer Verteilung zuzuordnen, welche durch die Mittel zur Bestimmung einer Verteilung zur Verfügung gestellt wird.

4. Datenverarbeitungssystem nach einem der vorhergehenden Ansprüche, des Weiteren umfassend Mittel (150, 152) zur Visualisierung einer gegenwärtigen Verteilung und einer erneuten Verteilung, welche durch die Mittel zur Bestimmung einer Verteilung zur Verfügung gestellt werden und Mittel (156) zur Eingabe einer Benutzerannahme der erneuten Verteilung.

5. Verfahren zur Bestimmung einer Verteilung eines Satzes von Objekten zu Verarbeitungseinheiten eines Clusters von Verarbeitungseinheiten, wobei die Objekte eine erste und eine zweite Eigenschaft aufweisen, wobei alle Verarbeitungseinheiten einen Speicher (104) und einen Prozessor (102) aufweisen, wobei alle Speicher dieselbe Speicherkapazität zur Aufnahme von Objekten aufweisen und wobei alle Prozessoren dieselbe Lastkapazität aufweisen, wobei das Verfahren umfasst:

- Auswahl eines ersten oder eines zweiten Betriebsmodus,
- Bestimmung einer Verteilung des Satzes von Objekten über einen Satz der Verarbeitungseinheiten,
- Bestimmung einer minimalen Anzahl von Verarbeitungseinheiten, welche ausreichende Kapazitäten zur Aufnahme des Satzes von Objekten aufweisen durch die Schritte:

a) Durchführung eines Sortiervorgangs, um die Objekte basierend auf der ersten und/oder zweiten Eigenschaft in abnehmender Reihenfolge zu sortieren, um eine Objektsequenz (201; 200, 201) zur Verfügung zu stellen,
b) Initialisierung eines Index i für die Verarbeitungseinheiten (204),

- Verarbeitung der ersten Objektsequenz beginnend mit dem ersten Objekt der Objektsequenz durch

c) Zuordnung des ersten Objekts zu der Verarbeitungseinheit i (206),
d) Löschen des ersten Objekts aus der Objektsequenz (208),
e) Zusammenrechnen der ersten und/oder zweiten Eigenschaften der Objekte, welche bereits zur Verarbeitungseinheit i zugeordnet wurden, um erste und/oder zweite Gesamteigenschaften zur Verfügung zu stellen,
f) Berechnung erster und/oder zweiter Lücken zwischen den ersten und/oder zweiten Gesamteigenschaften und der entsprechenden (210; 210, 211) Speicherkapazität und/oder Lastkapazität,
g) Bestimmung, ob ein Objekt der Objektsequenz übrigbleibt, welches in die erste und/oder zweite Lücke (212) passt, und wenn dies der Fall ist, Zuordnung (214) dieses Objekts zu der Verarbeitungseinheit i, welche die größte erste und/oder zweite Eigenschaft aufweist, Löschen (216) dieses Objekts aus der Objektsequenz und Zurückgehen nach Schritt f), und wenn es kein solches Objekt gibt, welches in die erste und/oder zweite Lücke passt, Bestimmung (218), ob die Objektsequenz leer ist, wobei der index i um 1 erhöht wird (220), wenn die Objektsequenz nicht leer ist und zurückgehen zu Schritt c), und wobei der Index i der minimalen Anzahl entspricht, wenn die Objektsequenz leer ist (222), wobei im ersten Betriebsmodus der Satz der Verarbeitungseinheiten alle Verarbeitungseinheiten des Clusters enthält und in dem zweiten Betriebsmodus der Satz von Verarbeitungseinheiten die minimale Anzahl der Verarbeitungseinheiten enthält,

- des Weiteren umfassend Auswahl eines ersten und zweiten Verteilungsmodus, wobei im ersten Verteilungsmodus eine einzelne Eigenschaft des Objekts dazu verwendet wird, um die Verteilung zu bestimmen und wobei in dem zweiten Verteilungsmodus erste und zweite Eigenschaften der Objekte dazu verwendet werden, um die Verteilung zu bestimmen,
- wobei die einzelne Eigenschaft die Größe eines Objekts oder die Last eines Objekts ist,
- wobei die erste Eigenschaft die Größe eines Objekts ist und die zweite Eigenschaft die Last eines Objekts ist,
- wobei im ersten Verteilungsmodus die einzelne Eigenschaft dazu verwendet wird, um die minimale Anzahl von Verarbeitungseinheiten zu bestimmen und wobei in dem zweiten Verteilungsmodus die ersten und zweiten Eigenschaften dazu verwendet werden, um die minimale Anzahl von Verarbeitungseinheiten zu bestimmen, wenn der zweite Betriebsmodus ausgewählt ist.

6. Verfahren nach Anspruch 5, des Weiteren umfassend automatisches Initiieren einer erneuten Verteilung des Satzes von Objekten, um Objekte des Satzes von Objekten erneut Verarbeitungseinheiten des Clusters gemäß einer Verteilung zuzuordnen, welche durch die Mittel zur Bestimmung einer Verteilung zur Verfügung gestellt werden.

7. Verfahren nach Anspruch 5 oder 6, des Weiteren umfassend manuelles initiieren einer erneuten Verteilung des Satzes von Objekten, um Objekte des Satzes von Objekten erneut zu Verarbeitungseinheiten des Clusters in Übereinstimmung mit einer Verteilung zuzuordnen, welche durch die Mittel zur Bestimmung einer Verteilung zur Verfügung gestellt wird.

8. Verfahren nach einem der vorhergehenden Ansprüche 5 bis 7, des Weiteren umfassend Visualisieren einer gegenwärtigen Verteilung und einer erneuten Verteilung, welche durch die Mittel zur Bestimmung einer Verteilung zur Verfügung gestellt werden und Mittel (156) zur Eingabe einer Benutzerannahme der erneuten Verteilung.

9. Computerprogrammprodukt umfassend computerausführbare Instruktionen zur Durchführung eines Verfahrens gemäß einem der vorigen Schritte 5 bis 8.

**Revendications**

1. Système de traitement de données pour déterminer une distribution d'une série d'objets, lesdits objets ayant une première et une deuxième propriété, vers des unités de traitement d'un groupement (100) d'unités de traitement, toutes les unités de traitement ayant une mémoire (104) et un processeur (102), toutes les mémoires ayant les mêmes capacités de stockage pour accueillir des objets, et tous les processeurs ayant les mêmes capacités de charge, le système de traitement de données comprenant :

   - des moyens (114, 130) pour sélectionner un premier ou un deuxième mode de fonctionnement,
   - des moyens (116, 118, 120, 122) pour déterminer une distribution de la série d'objets sur une série des unités de traitement,
   - des moyens (116, 118, 120, 122) pour déterminer un nombre minimum des unités de traitement qui ont des capacités suffisantes pour accueillir la série d'objets, les moyens pour déterminer un nombre minimum pouvant fonctionner pour

   a) effectuer une opération de tri afin de trier les objets sur la base de ladite première et/ou ladite deuxième propriété par ordre décroissant pour fournir une séquence d'objets (201 ; 200, 201),
   b) initialiser un index i pour les unités de traitement (204),
   le traitement de la première séquence d'objets commençant par le premier objet de la séquence d'objets en
   c) attribuant le premier objet à l'unité de traitement i (206),
   d) supprimant le premier objet de la séquence d'objets (208),
   e) additionnant les première et/ou deuxième propriétés des objets qui ont déjà été attribués à l'unité de traitement i pour fournir des première et/ou deuxième propriétés agrégées,
   f) calculant des premier et/ou deuxième trous entre les première et/ou deuxième propriétés agrégées et la capacité de stockage et/ou capacité de charge, respectivement (210 ; 210, 211),
   g) déterminant s'il reste un objet dans la séquence d'objets qui correspond aux premier et/ou deuxième trous (212) et, si tel est le cas, attribuant (214) cet objet à l'unité de traitement i ayant les plus grandes première et/ou deuxième propriétés, supprimant (216) cet objet de la séquence d'objets, et retournant à l'étape f), et s'il n'y a aucun objet de la sorte qui correspond aux premier et/ou deuxième trous, déterminant (218) si la séquence d'objets est vide, l'index i étant incrémenté (220) de 1 lorsque la séquence d'objets n'est pas vide et revenant à l'étape c), et l'index i étant égal au nombre minimum lorsque la séquence d'objets est vide (222),

   dans lequel, dans le premier mode de fonctionnement, la série des unités de traitement contient toutes les unités de traitement du groupement et, dans le deuxième mode de fonctionnement, la série des unités de traitement contient le nombre minimum des unités de traitement,
   comprenant de plus des moyens (114, 130) pour sélectionner un premier et un deuxième mode de distribution, une propriété unique des objets étant utilisée, dans le premier mode de distribution, pour déterminer la distribution et, dans le deuxième mode de distribution, des première et deuxième propriétés des objets étant utilisées pour déterminer la distribution,
   dans lequel la propriété unique est la taille d'un objet ou la charge d'un objet,
   dans lequel la première propriété est la taille d'un objet et la deuxième propriété est la charge d'un objet,
   dans lequel, dans le premier mode de distribution, la propriété unique est utilisée pour déterminer le nombre minimum des unités de traitement, et
   dans lequel, dans le deuxième mode de distribution, les première et deuxième propriétés sont utilisées pour déterminer le nombre minimum des unités de traitement, si le deuxième mode de fonctionnement est sélectionné.

2. Système de traitement de données de la revendication 1, comprenant de plus des moyens (130, 132) pour initier automatiquement une redistribution de la série d'objets afin de réaffecter des objets de la série d'objets à des unités de traitement du groupement conformément à une distribution fournie par les moyens pour déterminer une distribution.

3. Système de traitement de données de n'importe laquelle des revendications précédentes, comprenant de plus des moyens (114 ; 150, 156, 158, 160) pour initier manuellement une redistribution de la série d'objets afin de réaffecter des objets de la série d'objets à des unités de traitement du groupement conformément à une distribution fournie par les moyens pour déterminer une distribution.

4.  Système de traitement de données de n'importe laquelle des revendications précédentes, comprenant de plus des moyens (150, 152) pour visualiser une distribution actuelle et une redistribution fournie par les moyens pour déterminer une distribution et moyen (156) pour saisir l'acceptation par un utilisateur de la redistribution.

5.  Méthode de détermination d'une distribution d'une série d'objets, lesdits objets ayant une première et une deuxième propriété, vers des unités de traitement d'un groupement d'unités de traitement, toutes les unités de traitement ayant une mémoire (104) et un processeur (102), toutes les mémoires ayant les mêmes capacités de stockage pour accueillir des objets, et tous les processeurs ayant les mêmes capacités de charge, la méthode comprenant :

    - la sélection d'un premier ou d'un deuxième mode de fonctionnement,
    - la détermination d'une distribution de la série d'objets sur une série des unités de traitement,
    - la détermination d'un nombre minimum des unités de traitement qui ont des capacités suffisantes pour accueillir la série d'objets par les étapes consistant à

    a) effectuer une opération de tri afin de trier les objets sur la base de ladite première et/ou ladite deuxième propriété par ordre décroissant pour fournir une séquence d'objets (201 ; 200, 201),
    b) initialiser un index i pour les unités de traitement (204),
    le traitement de la première séquence d'objets commençant par le premier objet de la séquence d'objets en
    c) attribuant le premier objet à l'unité de traitement i (206),
    d) supprimant le premier objet de la séquence d'objets (208),
    e) additionnant les première et/ou deuxième propriétés des objets qui ont déjà été attribués à l'unité de traitement i pour fournir des première et/ou deuxième propriétés agrégées,
    f) calculant des premier et/ou deuxième trous entre les première et/ou deuxième propriétés agrégées et la capacité de stockage et/ou capacité de charge, respectivement (210 ; 210, 211),
    g) déterminant s'il reste un objet dans la séquence d'objets qui correspond aux premier et/ou deuxième trous (212) et, si tel est le cas, attribuant (214) cet objet à l'unité de traitement i ayant les plus grandes première et/ou deuxième propriétés, supprimant (216) cet objet de la séquence d'objets, et retournant à l'étape f), et s'il n'y a aucun objet de la sorte qui correspond aux premier et/ou deuxième trous, déterminant (218) si la séquence d'objets est vide, l'index i étant incrémenté (220) de 1 lorsque la séquence d'objets n'est pas vide et revenant à l'étape c), et l'index i étant égal au nombre minimum lorsque la séquence d'objets est vide (222),

    dans laquelle, dans le premier mode de fonctionnement, la série des unités de traitement contient toutes les unités de traitement du groupement et, dans le deuxième mode de fonctionnement, la série des unités de traitement contient le nombre minimum des unités de traitement,
    comprenant de plus la sélection d'un premier ou d'un deuxième mode de distribution, une propriété unique des objets étant utilisée, dans le premier mode de distribution, pour déterminer la distribution et, dans le deuxième mode de distribution, les première et deuxième propriétés des objets étant utilisées pour déterminer la distribution,
    dans laquelle la propriété unique est la taille d'un objet ou la charge d'un objet,
    dans laquelle la première propriété est la taille d'un objet et la deuxième propriété est la charge d'un objet,
    dans laquelle, dans le premier mode de distribution, la propriété unique est utilisée pour déterminer le nombre minimum des unités de traitement, et
    dans laquelle, dans le deuxième mode de distribution, les première et deuxième propriétés sont utilisées pour déterminer le nombre minimum des unités de traitement, si le deuxième mode de fonctionnement est sélectionné.

6.  Méthode de la revendication 5, comprenant de plus initier automatiquement une redistribution de la série d'objets afin de réaffecter des objets de la série d'objets à des unités de traitement du groupement conformément à une distribution fournie par les moyens pour déterminer une distribution.

7.  Méthode de la revendication 5 ou 6, comprenant de plus initier manuellement une redistribution de la série d'objets afin de réaffecter des objets de la série d'objets à des unités de traitement du groupement conformément à une distribution fournie par les moyens pour déterminer une distribution.

8.  Méthode de n'importe laquelle des revendications précédentes 5 à 7 comprenant de plus visualiser une distribution actuelle et une redistribution fournie par les moyens pour déterminer une distribution et moyen (156) pour saisir l'acceptation par un utilisateur de la redistribution.

9. Produit de programme informatique comprenant des instructions exécutables sur ordinateur pour réaliser une méthode de n'importe laquelle des revendications précédentes 5 à 8.

FIG. 1

EP 1 612 672 B1

**FIG. 2**

EP 1 612 672 B1

FIG. 3

EP 1 612 672 B1

```
┌─────────────────────────────────────┐
│        Initiate Redistribution      │──162
└─────────────────────────────────────┘
                  │
                  ▼
               164
              ╱      ╲            no
            ╱  Minimization ?  ╲──────────────────────────────┐
            ╲                ╱                                 │
              ╲           ╱                                    │
                  │ yes                                        │
                  ▼                                            ▼
┌─────────────────────────────────────┐      ┌──────────────────────────────────────────────┐
│ Calculate minimum number of required│──168 │ Calculate new distribtion for actual number  │
│              blades                 │      │                of blades                     │
└─────────────────────────────────────┘  166─└──────────────────────────────────────────────┘
                  │                                            │
                  ▼                                            │
┌─────────────────────────────────────┐                       │
│ Calculate new distribution for      │──170                  │
│      minimum number of blades       │                       │
└─────────────────────────────────────┘                       │
                  │                            ┌──172          │
                  ▼                            │               │
┌─────────────────────────────────────┐       │               │
│        Redistribute data objects    │◄──────┴───────────────┘
└─────────────────────────────────────┘
```

**FIG. 4**

Sorting of M objects by size — 201

Object sequence — 202

i = 1 — 204

Assign first object of sequence to Blade B$_i$ — 206

Delete first object from sequence — 208

Calculate Gap G between aggregated objects being assigned to Blade B$_i$ and threshold — 210

Delete largest object from sequence — 216

Assign largest object to Blade$_i$ — 214

Is there an object in sequence which fits into G ? — 212

yes

no

Are all objects assigned to Blades ? — 218

no

i + 1 — 220

yes

i = minimum numbers of required Blades N — 222

Output assignment of objects to Blades — 224

FIG. 5

FIG. 6

**FIG. 7**

**FIG. 8**

**FIG. 9**

**FIG. 10**

**Table Sizes (sorted)**

4096 MB = 4 x 1024 MB

356 MB gap: max. free space on Blade2

Find next tables that fit into gap:
Tables 2, 13, 14 (sum 280 MB)

Size (MB)

Blade 1

Blade 2

Table Number

**FIG. 11**

**FIG. 12**

**Table Sizes (sorted)**

**4096 MB = 4 x 1024 MB**

Gap = 2196 MB

G~

Blade 1  Blade 2  Blade 3  Blade 4  Blade 5  Blade 6  Blade 7  Blade 8

Size (MB): 0, 500, 1000, 1500, 2000, 2500, 3000, 3500, 4000

Table Number: 20  15  1  5  4  16  10  17  9  18  8  19  7  3  11  12  6  2  13  14

Blade 1: Tables 20, 12          Blade 4: Tables 5, 19      Blade 7: Tables 10, 18, 3
Blade 2: Tables 15, 6, 2, 13, 14   Blade 5: Tables 4, 17      Blade 8: Tables 8, 11
Blade 3: Tables 1, 7             Blade 6: Tables 16, 9

# FIG. 13

| Determine largest Gap G | 1100 |

↓

| Divide largest Gap G by N: Delta 1 | 1102 |

↓

| threshold = maximum storage capacity of Blade - Delta 1 | 1104 |

↓

| perform method of FIG. 5 again | 1106 |

# FIG. 14

FIG. 15

**Table Sizes (sorted)**

4000 ┬ 3821 MB = 4096 MB – 275 MB

| Blade 1: Tables 20, 6 | Blade 4: Tables 5, 7 | Blade 7: Tables 10, 17 |
|---|---|---|
| Blade 2: Tables 15, 2, 13, 14 | Blade 5: Tables 4, 18 | Blade 8: Tables 8, 19, 3, 11 |
| Blade 3: Tables 1, 12 | Blade 6: Tables 16, 9 | |

**FIG. 16**

Delta 2 = ( Σ storage capacity of blades - Σ object size) / number of Blades N — 1400

Threshold = storage capacity - Delta 2 — 1402

Perform method of FIG. 5 again — 1404

1408

Output assignment of objects to Blades

no ← 1406 Excess amount of memory ?

yes

Delta 3: Excess amount / number of Blades N — 1410

Threshold = Threshold + Delta 3 — 1412

FIG. 17

**FIG. 18**

**FIG. 19**

FIG. 20

Delta 4 = Delta 2 / number of increments ~1800

Threshold = Σ object size / number of Blades N ~1802

perform method of FIG. 5 again ~1804

calculate statistical measure ~1806

Threshold = Threshold + Delta 4 ~1808

select assignment based on statistical measures ~1810

# FIG. 21

**FIG. 22**

**FIG. 23**

## Table Sizes (sorted)

4096 MB = 4 x 1024 MB

3712 MB (limit)

G~

T

Process tables in descending order

**Size (MB)** (y-axis): 4000, 3500, 3000, 2500, 2000, 1500, 1000, 500, 0

Bars labeled: Blade 1, Blade 2, Blade 3, Blade 4, Blade 5, Blade 6, Blade 7, Blade 8

**Table Number** (x-axis): 20  15  1  5  4  16  10  17  9  18  8  19  7  3  11  12  6  2  13  14

☐ Donor blade
▨ Recipient blade

Blade 1: Tables 20, 12     Blade 4: Tables 5, 19     Blade 7: Tables 10, 18, 3
Blade 2: Tables 15, 6, 2, 13, 14     Blade 5: Tables 4, 17     Blade 8: Tables 8, 11
Blade 3: Tables 1, 7     Blade 6: Tables 16, 9

# FIG. 24

**FIG. 25**

FIG. 26

**FIG. 27**

**Table Sizes (sorted)**

4096 MB = 4 x 1024 MB

G

3712 MB (limit)

T

Size (MB): 4000, 3500, 3000, 2500, 2000, 1500, 1000, 500, 0

Blade 1, Blade 2, Blade 3, Blade 4, Blade 5, Blade 6, Blade 7, Blade 8

Table Number: 20 15 1 5 4 16 10 17 9 18 8 19 7 3 11 12 6 2 13 14

☐ Donor blade
▨ Recipient blade

Blade 1: Tables 20, 12     Blade 4: Tables 5, 19     Blade 7: Tables 18, 3, 17
Blade 2: Tables 15, 6, 2, 13, 14   Blade 5: Tables 4     Blade 8: Tables 8, 11, 10
Blade 3: Tables 1, 7       Blade 6: Tables 16, 9

# FIG. 28

**Table Sizes (sorted)**

Blade 1: Tables 20, 12    Blade 4: Tables 5, 19    Blade 7: Tables 18, 3, 17
Blade 2: Tables 15, 6, 2, 13, 14    Blade 5: Tables 4    Blade 8: Tables 8, 11, 10
Blade 3: Tables 1, 7    Blade 6: Tables 16, 9

# FIG. 29

**FIG. 30**

Blade 1: Tables 20, 12
Blade 2: Tables 15, 6, 2, 13, 14
Blade 3: Tables 1, 7
Blade 4: Tables 5, 19
Blade 5: Tables 4, 18
Blade 6: Tables 16, 9
Blade 7: Tables 3, 17
Blade 8: Tables 8, 11, 10

**FIG. 31**

Blade 1: Tables 20, 12    Blade 4: Tables 5, 19    Blade 7: Tables 3, 17, 8
Blade 2: Tables 15, 6, 2, 13, 14    Blade 5: Tables 4, 18    Blade 8: Tables 11, 10
Blade 3: Tables 1, 7    Blade 6: Tables 16, 9

**FIG. 32**

**FIG. 33**

**FIG. 34**

Blade 1: Tables 20, 6          Blade 4: Tables 5, 7          Blade 7: Tables 3, 17, 8
Blade 2: Tables 15, 2, 13, 14  Blade 5: Tables 4, 18         Blade 8: Tables 11, 10, 19
Blade 3: Tables 1, 12          Blade 6: Tables 16, 9

# FIG. 35

**FIG. 36**

FIG. 37 { FIG. 37A / FIG. 37B

**FIG. 37A**

Flowchart:

- Initial Distribution — 300
- Specify set of donor blades and find number of donor blades D — 302
- Specify set of recipient blades and find number of recepient blades R — 304
- Find number of largest table K and calculate standard deviation S — 306
- 308 — Initialize number of current table N = K
- 310 — D ≥ 1 and R ≥ 1 (no / yes)
- 312 — Table N is on a donor blade (no / yes)
- 314 — Set current recipient r to number of first recipient blade in the set
- 316 — Table N fits on recipient r (no / yes)
- 318 — Calculate corresponding standard deviation s(r) for a move of table N from current blade C to blade r
- 320 — s(r) < S (no / yes)
- 322 — Add pair A(r, s(r)) as an alternative to a set of alternatives

Further recipients exist 324 — yes → Set r to number of next recipient blade in the set — 326

no

≥ 1 alternative A(r, s[R]) exists 328 — no →

yes

Find alternative A(r, s(r)) with smallest s(r) — 330

Set targeted recipient blade number T = r — 332

Move table N from blade C to blade T and set S = s(T) — 334

C IS NOW A RECIPIENT 336 — yes → D = D - 1  R = R + 1 → Remove C from set of donors and add C to set of recipients

no

T is now a donor 342 — yes → D = D + 1  R = R - 1 → Remove C from set of recipients and add C to set of donors

no

348 — Find next smallest table K after table N

Table K found 350 — YES

no

Final Distribution — 352

**FIG. 37B**

Calculating index for each of the M objects — 200

Sorting of M objects by index size — 201

Object sequence — 202

i = 1 — 204

Assign first object of sequence to Blade $B_i$ — 206

Delete first object from sequence — 208

Calculate Gap $G_S$ between aggregated object sizes of Blade $B_i$ and threshold $T_S$ — 210

Calculate Gap $G_L$ between aggregated object loads of Blade $B_i$ and threshold $T_L$ — 211

Delete object from sequence — 216

Assign object to Blade Bi — 214

Next object in sequence that fits into Gaps $G_S$ and $G_L$? — 212

yes

no

Are all objects assigned to Blades ? — 218

no

i + 1 — 220

yes

i = minimum numbers of required Blades N — 222

Output assignment of objects to Blades — 224

**FIG. 38**

**FIG. 39**

**FIG. 40**

**FIG. 41**

**FIG. 42**

FIG. 43

FIG. 44

FIG. 45

FIG. 46

**FIG. 47**

FIG. 48

FIG. 49

FIG. 50

**FIG. 51**

Blade 1:Tables 8, 6, 13   Blade 4:Table  15   Blade 7:Tables 19, 17, 7  Blade 10:Table 16
Blade 2:Tables 20, 12   Blade 5:Tables 2, 5   Blade 8:Tables 11, 9
Blade 3:Tables 14, 1   Blade 6:Tables 3, 10  Blade 9:Tables 4, 18

# FIG. 52

Determine largest remaining Gaps $G_S$ and $G_L$ —800

Divide largest remaining Gap $G_S$ by N: Delta 1
Divide largest remaining Gap $G_L$ by N: Delta 2 —802

$T_S = T_S \cdot$ Norm (Delta 1)
$T_L = T_L \cdot$ Norm (Delta 2) —804

perform method of FIG. 38 again —806

# FIG. 53

| Delta 3 = ( $\Sigma$ storage capacity of blades - $\Sigma$ object size) / number of Blades N | 900 |

| Delta 4 = ( $\Sigma$ load capacity of blades - $\Sigma$ object loads) / number of Blades N | 902 |

| $T_S = T_S$ - Norm (Delta 3) | 904 |

| $T_L = T_L$ - Norm (Delta 4) | 906 |

| Perform method of FIG. 38 again | 908 |

912
Output assignment of objects to Blades

no ← 910 Excess amount of memory and / or load ?

yes

| Delta 5: Excess memory Amount / Number of Blades N  Delta 6: Excess Load / Number of Blades N | 914 |

| $T_S = T_S$ - Norm (Delta 5)  $T_L = T_L$ - Norm (Delta 6) | 916 |

## FIG. 54

Delta 7 = Delta 3 / number of increments
Delta 8 = Delta 4 / number of increments   —1000

$T_S$= Norm ($\Sigma$ object size / number of Blades N)
$T_L$ = Norm ($\Sigma$ load / number of Blades N)   —1002

perform method of FIG. 38 again   —1004

calculate statistical measure   —1006

Increment $T_S$ by Norm (Delta 7) or $T_L$ by Norm (Delta 8)   —1008

select assignment based on statistical measures   —1010

# FIG. 55

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030105903 A